# EUROPEAN PATENT APPLICATION

(11) **EP 4 726 634 A1**
(43) Date of publication of application: **15.04.2026**
(21) Application number: 24923503.7
(22) Date of filing: 06.12.2024
(51) Int. Cl.: G06Q 30/0242

(54) **ADVERTISING ATTRIBUTION METHOD, ADVERTISING SYSTEM, ELECTRONIC DEVICE, AND SERVER**

(30) Priority: 07.02.2024 CN 202410175857
(71) Applicant: Huawei Technologies Co., Ltd., Shenzhen, Guangdong 518129 (CN)
(72) Inventor: SI, Xiaoyun, Shenzhen, Guangdong 518129 (CN); YUAN, Rongchao, Shenzhen, Guangdong 518129 (CN); HU, Lei, Shenzhen, Guangdong 518129 (CN); ZHONG, Weicai, Shenzhen, Guangdong 518129 (CN)
(74) Representative: Huawei European IPR
(86) International application number: PCT/CN2024/137433
(87) International publication number: WO 2025/167301

(57) **Abstract**

This application provides an advertisement attribution method, an advertisement system, an electronic device, and a server. In the method, in response to a first operation triggered by a user, a first electronic device sends first advertisement event information to a first server, where the first advertisement event information indicates a group account of a first group to which the first electronic device belongs and a first advertisement event. The first server determines, based on the first advertisement event information, and stores the first advertisement event corresponding to the group account of the first group. The first server obtains a plurality of advertisement events corresponding to the group account of the first group, and performs advertisement attribution analysis based on the plurality of advertisement events corresponding to the group account of the first group, to obtain a first advertisement attribution result. In this solution, the first server performs advertisement attribution analysis based on the plurality of advertisement events corresponding to the group account, so that advertisement events sent by a plurality of associated electronic devices in a same group can be attributed to one link, to improve accuracy of advertisement attribution.

## Description

### CROSS-REFERENCE TO RELATED APPLICATIONS

This application claims priority to Chinese Patent Application No. 202410175857.0, filed with the China National Intellectual Property Administration on February 7, 2024 and entitled "ADVERTISEMENT ATTRIBUTION METHOD, ADVERTISEMENT SYSTEM, ELECTRONIC DEVICE, AND SERVER", which is incorporated herein by reference in its entirety.

### TECHNICAL FIELD

This application relates to the field of internet technologies, and in particular, to an advertisement attribution method, an advertisement system, an electronic device, and a server.

### BACKGROUND

A purpose of commodity advertisements is to promote, for advertisers, commodities that users want to purchase to the users according to advertisement plans. For example, a commodity advertisement may be placed in a media application. When browsing the media application by using an electronic device, a user may see an advertisement placed by an advertiser in the media application. When the user is interested in the advertisement, the user may click the advertisement, and the electronic device may jump to display a commodity interface or a commodity-related interface in an advertiser application.

Advertisement attribution analysis is a main means of evaluating advertisement promotion effect. The advertisement attribution analysis may be used to analyze and determine a degree of impact of an advertisement point on a conversion behavior, and a conversion behavior of the commodity advertisement includes, for example, a payment behavior. The advertiser may optimize an advertisement placement strategy based on an advertisement attribution result, for example, adjusting a target audience and increasing a placement volume.

However, a difference between the commodity advertisement and an application recommendation advertisement or a news recommendation advertisement lies in that the commodity is an entity. After the user purchases the commodity, the commodity may be shared by a family. Alternatively, the user purchases the commodity for another user. Therefore, after the user is interested in the advertisement and views the commodity, the user may not immediately place an order for payment due to various reasons, but needs to communicate with a family member before placing the order for payment. In addition, a final order placement and payment behavior may not occur on the electronic device of the user who clicks the advertisement. Instead, the family member or the another user places the order for payment on another electronic device. In other words, another device or another account in the family and on which the commodity advertisement is displayed may also be a node on a valid conversion path of the final payment behavior. However, in a current advertisement attribution technology, only events such as clicking, adding to favorites, and payment performed by the user on the commodity advertisement on a single device can be attributed, and advertisement attribution analysis cannot be performed on advertisement events that occur on a plurality of electronic devices.

It can be learned that the current advertisement attribution analysis method is simple and has low accuracy.

### SUMMARY

This application provides an advertisement attribution method, an advertisement system, an electronic device, and a server, to provide a cross-device advertisement attribution method, and improve accuracy of advertisement attribution.

According to a first aspect, this application provides an advertisement attribution method, and the method may be performed by an electronic device. The method includes: The electronic device displays an advertisement; and the electronic device sends advertisement event information to a server in response to a first operation triggered by a user, where the first operation is an operation related to the advertisement or an operation related to a commodity interface corresponding to the advertisement, and the advertisement event information sent by the electronic device to the server indicates a group account of a first group to which the electronic device belongs and an advertisement event.

For example, the operation related to the advertisement may be an operation of clicking the advertisement by the user, and an operation related to a commodity corresponding to the advertisement may be any one of operations such as adding the commodity corresponding to the advertisement to favorites, adding the commodity corresponding to the advertisement to a shopping cart, and paying for the commodity corresponding to the advertisement.

In the foregoing method, when detecting the operation that is triggered by the user and that is related to the advertisement or the commodity interface corresponding to the advertisement, the electronic device may send the advertisement event information to the server, where the advertisement event information may indicate the group account of the first group to which the electronic device belongs and the advertisement event, so that the electronic device may send the advertisement event that occurs on the electronic device to the server, and may indicate, to the server, the group to which the electronic device belongs. In this way, the server may perform advertisement attribution analysis based on a group including a plurality of electronic devices, to implement cross-device advertisement attribution, and improve accuracy of advertisement attribution.

In a possible design, the advertisement event information includes an identifier of the electronic device and/or the group account of the first group. According to this design, the electronic device may add the identifier of the electronic device and/or the group account of the first group to the advertisement event information, to indicate, to the server, the group account of the first group to which the electronic device belongs. When the advertisement event information includes the identifier of the electronic device, the server may determine, based on a group device mapping relationship and the identifier of the electronic device, the group account of the first group to which the electronic device belongs. In other words, this application provides a plurality of solutions for flexibly indicating the group account of the group to which the electronic device belongs.

In a possible design, the method further includes: The electronic device sends the group device mapping relationship corresponding to the electronic device to the server, where the group device mapping relationship corresponding to the electronic device includes a mapping relationship between the group account of the first group and a plurality of electronic devices in the first group, and the plurality of electronic devices include the electronic device. According to this design, the electronic device may send the group device mapping relationship corresponding to the electronic device to the server, so that the server may determine, based on the group device mapping relationship corresponding to the electronic device, the group account of the group to which the electronic device belongs, and the server performs advertisement attribution analysis based on the group.

For example, the group account of the first group is any one of: an identifier of a primary device in the first group, a user-defined identifier, an identifier generated according to a preset rule, or an identifier preconfigured by a system.

For example, the identifier of the primary device is any one of the following: a unique identifier, an internet protocol address, or an open advertising identifier of the primary device.

In a possible design, the advertisement event information further includes a device type identifier of the electronic device. According to this design, the electronic device may add the device type identifier of the electronic device to the advertisement event information, so that the server obtains the advertisement event based on a device type of the electronic device to perform advertisement attribution. This enriches advertisement attribution manners.

For example, the advertisement event includes any one of the following: clicking the advertisement, adding the commodity to favorites, adding the commodity to the shopping cart, or paying for the commodity; and the advertisement event information includes an identifier of the advertisement event.

According to a second aspect, this application provides an advertisement attribution method, and the method may be performed by a first server. The method includes: The first server receives first advertisement event information from a first electronic device, where the first advertisement event information indicates a group account of a first group to which the first electronic device belongs and a first advertisement event. The first server determines, based on the first advertisement event information, the first advertisement event corresponding to the group account of the first group to which the first electronic device belongs, and stores the first advertisement event corresponding to the group account of the first group. The first server obtains a plurality of advertisement events corresponding to the group account of the first group, where the plurality of advertisement events corresponding to the group account of the first group are determined based on a plurality of pieces of advertisement event information sent by a plurality of electronic devices in the first group, and the plurality of advertisement events corresponding to the group account of the first group include the first advertisement event. The first server performs advertisement attribution analysis based on the plurality of advertisement events corresponding to the group account of the first group, to obtain a first advertisement attribution result.

In the foregoing method, the plurality of electronic devices may be associated with the same group account, so that the first server may obtain, based on the group account, the advertisement events sent by the plurality of electronic devices, perform advertisement attribution analysis based on the plurality of advertisement events corresponding to the group account, and attribute the advertisement events sent by the plurality of associated electronic devices in the same group to one link. In this way, a cross-device advertisement attribution method is provided, to improve accuracy of advertisement attribution.

In a possible design, before obtaining the plurality of advertisement events corresponding to the group account of the first group, the first server receives second advertisement event information from a second electronic device, where the second advertisement event information indicates the group account of the first group to which the second electronic device belongs and a second advertisement event; and the first server determines, based on the second advertisement event information, the second advertisement event corresponding to the group account of the first group to which the second electronic device belongs, and stores the second advertisement event corresponding to the group account of the first group, where the plurality of advertisement events corresponding to the group account of the first group include the second advertisement event. According to this design, after detecting an operation that is triggered by a user and that is related to an advertisement or a commodity corresponding to the advertisement, any electronic device in the plurality of electronic devices in the same group may send advertisement event information to the first server, to indicate an advertisement event that occurs in the electronic device and the group account of the group to which the electronic device belongs. The first server may store the plurality of advertisement events sent by the plurality of electronic devices in the same group, so that advertisement attribution analysis can be implemented based on the group account.

In a possible design, before obtaining the plurality of advertisement events corresponding to the group account of the first group, the first server receives third advertisement event information sent by a second server, where the third advertisement event information is sent by the first electronic device to the second server, and the third advertisement event information indicates the group account of the first group to which the first electronic device belongs and a third advertisement event; and determines, based on the third advertisement event information, the third advertisement event corresponding to the group account of the first group to which the first electronic device belongs, and stores the third advertisement event corresponding to the group account of the first group, where the plurality of advertisement events corresponding to the group account of the first group include the third advertisement event. According to this design, when an advertisement system includes a plurality of servers, the first server may further receive advertisement event information forwarded by another server (for example, the second server) in the advertisement system, so that the electronic device in the advertisement system may send the advertisement event information to the first server, or may send the advertisement event information to the first server through the second server. This implements flexible transmission of the advertisement event information.

In a possible design, the first advertisement event information includes an identifier of the first advertisement event and an identifier of the first electronic device. Determining, based on the first advertisement event information, the first advertisement event corresponding to the group account of the first group to which the first electronic device belongs includes: determining, based on the identifier of the first advertisement event, the first advertisement event corresponding to the first electronic device; determining the group account of the first group based on a group device mapping relationship and the identifier of the first electronic device; and mapping the first advertisement event corresponding to the first electronic device to the first advertisement event corresponding to the group account of the first group, where the group device mapping relationship includes a mapping relationship between the group account of the first group and the plurality of electronic devices in the first group. According to this design, the first server may map the first advertisement event corresponding to the first electronic device to the first advertisement event corresponding to the group account of the first group, so that the server stores and performs advertisement attribution on the advertisement event based on the group account.

In a possible design, the method further includes: The first server receives the group device mapping relationship sent by the first electronic device, the second electronic device, or the second server.

In a possible design, before obtaining the plurality of advertisement events corresponding to the group account of the first group, the first server determines that the first advertisement event is a conversion event.

The conversion event may be a target advertisement event preset by an advertiser or an advertisement platform. For example, a conversion event of a commodity advertisement may be paying for a commodity, following a store to which the commodity belongs, or the like.

According to this design, after receiving the conversion event sent by the electronic device, the first server may perform advertisement attribution analysis based on the plurality of advertisement events corresponding to the group account of the group to which the electronic device belongs, to determine degrees of contribution of the plurality of electronic devices in the same group to a valid conversion path of the advertisement.

In a possible design, after determining, based on the first advertisement event information, the first advertisement event corresponding to the group account of the first group to which the first electronic device belongs, the first server determines the plurality of electronic devices included in the first group; and sends advertisement information corresponding to the first advertisement event to the plurality of electronic devices. According to this design, the first server may distribute an advertisement that the user is interested in to another electronic device associated with the user, to improve accuracy of advertisement placement.

In a possible design, the first advertisement event information includes a device type identifier of the first electronic device; and the method further includes: determining, based on the first advertisement event information, the first advertisement event corresponding to a device type of the first electronic device, and storing the first advertisement event corresponding to the device type of the first electronic device; obtaining a plurality of advertisement events corresponding to the device type of the first electronic device, where the plurality of advertisement events include the first advertisement event; and performing advertisement attribution analysis based on the plurality of advertisement events corresponding to the device type of the first electronic device, to obtain a second advertisement attribution result. According to this design, the second advertisement attribution result obtained by the first server by performing advertisement attribution analysis based on the device type may reflect degrees of contribution of advertisement displaying on different types of electronic devices to a final conversion behavior, so that types of electronic devices to which advertisements with different features are applicable for placement can be obtained through analysis.

For example, the advertisement event includes any one of the following: clicking an advertisement, adding a commodity to favorites, adding a commodity to a shopping cart, or paying for a commodity.

For example, the first server is an advertisement platform server, and the second server is a third-party monitoring server.

According to a third aspect, this application provides an advertisement system, and the advertisement system includes a first electronic device, a second electronic device, and a first server.

The first electronic device is configured to: display an advertisement; and send first advertisement event information to the first server in response to a first operation triggered by a first user, where the first operation is an operation related to the advertisement or an operation related to a commodity interface corresponding to the advertisement, and the first advertisement event information indicates a group account of a first group to which the first electronic device belongs and a first advertisement event.

The second electronic device is configured to: display the advertisement; and send second advertisement event information to the first server in response to a second operation triggered by a second user, where the second operation is an operation related to the advertisement or an operation related to the commodity interface corresponding to the advertisement, and the second advertisement event information indicates the group account of the first group to which the second electronic device belongs and a second advertisement event.

The first server is configured to: receive the first advertisement event information and the second advertisement event information; determine, based on the first advertisement event information, the first advertisement event corresponding to the group account of the first group to which the first electronic device belongs, and store the first advertisement event corresponding to the group account of the first group; determine, based on the second advertisement event information, the second advertisement event corresponding to the group account of the first group to which the second electronic device belongs, and store the second advertisement event corresponding to the group account of the first group; obtain a plurality of advertisement events corresponding to the group account of the first group, where the plurality of advertisement events corresponding to the group account of the first group are determined based on a plurality of pieces of advertisement event information reported and sent by a plurality of electronic devices in the first group, and the plurality of advertisement events corresponding to the group account of the first group include the first advertisement event and the second advertisement event; and perform advertisement attribution analysis based on the plurality of advertisement events, to obtain a first advertisement attribution result.

In a possible design, the advertisement system includes a second server.

The first electronic device is further configured to send third advertisement event information to the second server in response to a third operation triggered by a first user, where the third operation is an operation related to the commodity interface corresponding to the advertisement, and the third advertisement event information indicates the group account of the first group to which the first electronic device belongs and a third advertisement event.

The second server is configured to receive the third advertisement event information sent by the first electronic device, and send the third advertisement event information to the first server.

The first server is further configured to: before obtaining the plurality of advertisement events corresponding to the group account of the first group, receive the third advertisement event information sent by the second server; determine, based on the third advertisement event information, the third advertisement event corresponding to the group account of the first group to which the first electronic device belongs; and store the third advertisement event corresponding to the group account of the first group, where the plurality of advertisement events corresponding to the group account of the first group include the third advertisement event.

In a possible design, the first advertisement event information includes an identifier of the first advertisement event and an identifier of the first electronic device, and the second advertisement event information includes an identifier of the second advertisement event and an identifier of the second electronic device.

The first server is specifically configured to: determine, based on the identifier of the first advertisement event, the first advertisement event corresponding to the first electronic device; determine the group account of the first group based on a group device mapping relationship and the identifier of the first electronic device; map the first advertisement event corresponding to the first electronic device to the first advertisement event corresponding to the group account of the first group, where the group device mapping relationship includes a mapping relationship between the group account of the first group and the plurality of electronic devices in the first group; determine, based on the identifier of the second advertisement event, the second advertisement event corresponding to the second electronic device; determine the group account of the first group based on the group device mapping relationship and the identifier of the second electronic device; and map the second advertisement event corresponding to the second electronic device to the second advertisement event corresponding to the group account of the first group.

In a possible design, the first server is further configured to receive the group device mapping relationship sent by the first electronic device, the second electronic device, or the second server.

In a possible design, the first server is further configured to: after determining, based on the first advertisement event information, the first advertisement event corresponding to the group account of the first group to which the first electronic device belongs, and/or after determining, based on the second advertisement event information, the second advertisement event corresponding to the group account of the first group to which the second electronic device belongs, determine the plurality of electronic devices included in the first group; and send advertisement information corresponding to the first advertisement event to the plurality of electronic devices.

In a possible design, the first advertisement event information includes a device type identifier of the first electronic device.

The first server is further configured to: determine, based on the first advertisement event information, the first advertisement event corresponding to a device type of the first electronic device, and store the first advertisement event corresponding to the device type of the first electronic device; and obtain a plurality of advertisement events corresponding to the device type of the first electronic device, and perform advertisement attribution analysis based on the plurality of advertisement events corresponding to the device type of the first electronic device, to obtain a second advertisement attribution result.

According to a fourth aspect, this application provides an electronic device. The electronic device includes a plurality of functional modules, and the plurality of functional modules interact with each other to implement the method performed by the electronic device in the first aspect and the implementations of the first aspect. The plurality of functional modules may be implemented based on software, hardware, or a combination of software and hardware, and the plurality of functional modules may be randomly combined or divided based on a specific implementation.

According to a fifth aspect, this application provides an electronic device, including at least one processor and at least one memory. The at least one memory stores computer program instructions, and when the electronic device runs, the at least one processor performs the method performed by the electronic device in the first aspect and the implementations of the first aspect.

According to a sixth aspect, this application provides a server. The server includes a plurality of functional modules, and the plurality of functional modules interact with each other to implement the method performed by the server in the second aspect and the implementations of the second aspect. The plurality of functional modules may be implemented based on software, hardware, or a combination of software and hardware, and the plurality of functional modules may be randomly combined or divided based on a specific implementation.

According to a seventh aspect, this application provides a server, including at least one processor and at least one memory. The at least one memory stores computer program instructions, and when the server runs, the at least one processor performs the method performed by the server in the second aspect and the implementations of the second aspect.

According to an eighth aspect, this application further provides a chip. The chip is configured to read a computer program stored in a memory, to perform the method performed by the server or the electronic device in any one of the foregoing aspects and the implementations of the foregoing aspects.

According to a ninth aspect, this application further provides a chip system. The chip system includes a processing circuit and a storage medium, the storage medium stores instructions, and when being executed by the processing circuit, the instructions are used to implement the method performed by the server or the electronic device in any one of the foregoing aspects and the implementations of the foregoing aspects. The chip system may include a chip, or may include a chip and another discrete device.

According to a tenth aspect, this application further provides a computer-readable storage medium. The computer-readable storage medium stores a computer program. When the computer program is executed by a computer, the computer is enabled to perform the method performed by the server or the electronic device in any one of the foregoing aspects and the implementations of the foregoing aspects.

According to an eleventh aspect, this application further provides a computer program product including instructions. When the computer program product runs on a computer, the computer is enabled to perform the method performed by the server or the electronic device in any one of the foregoing aspects and the implementations of the foregoing aspects.

For technical effect that can be achieved by the technical solutions in any one of the third aspect to the eleventh aspect, refer to the descriptions of the technical effect that can be achieved by the technical solutions in the first aspect and the second aspect. Details are not described repeatedly.

### BRIEF DESCRIPTION OF DRAWINGS

FIG. 1 is a diagram of an architecture of an advertisement system according to an embodiment of this application;
FIG. 2 is a diagram of an advertisement attribution method;
FIG. 3 is an example diagram of a commodity advertisement conversion scenario;
FIG. 4 is an example diagram of another commodity advertisement conversion scenario;
FIG. 5 is a diagram of a structure of an electronic device according to an embodiment of this application;
FIG. 6 is a block diagram of a software structure of an electronic device according to an embodiment of this application;
FIG. 7 is an example diagram of a commodity conversion link in a smart home scenario using an OpenID mechanism according to an embodiment of this application;
FIG. 8 is a diagram of an architecture of an advertisement system according to an embodiment of this application;
FIG. 9A to FIG. 9D are a flowchart of an advertisement attribution method according to an embodiment of this application;
FIG. 10A to FIG. 10D are a flowchart of an advertisement attribution method according to an embodiment of this application;
FIG. 11A to FIG. 11D are a flowchart of an advertisement attribution method according to an embodiment of this application;
FIG. 12A to FIG. 12E are a flowchart of an advertisement attribution method according to an embodiment of this application;
FIG. 13 is a flowchart of an advertisement attribution method according to an embodiment of this application;
FIG. 14 is an example diagram of a possible structure of a data processing apparatus according to an embodiment of this application; and
FIG. 15 is an example diagram of a possible structure of a device according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

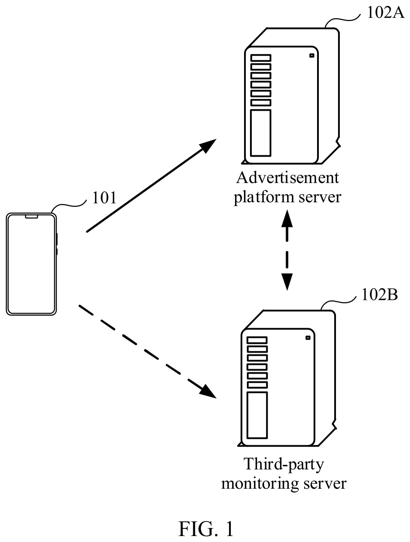

FIG. 1 is a diagram of an architecture of an advertisement system according to an embodiment of this application. As shown in FIG. 1, the advertisement system may include an electronic device 101 and a server. A media application and an advertiser application may be installed in the electronic device 101. The media application may be an advertisement requester, an advertisement may be placed in the media application, and the advertiser application is an application that is requested to place the advertisement in the media application. Optionally, the electronic device 101 may further run the media application and the advertiser application in another form, for example, run an applet or a web page of the media application or the advertiser application. The following uses an example in which the media application and the advertiser application are installed in the electronic device 101 for description.

In some scenarios, the server may include an advertisement platform server 102A, and the advertisement platform server 102A is a device that is deployed on a cloud side and that is configured to provide an advertisement resource for the advertisement requester. The advertisement platform server 102A may provide an advertisement platform for a brand advertiser, so that the brand advertiser places an advertisement. For example, the brand advertiser may place an advertisement task through the advertisement platform, and the advertisement platform server 102A places an advertisement based on the advertisement task. For example, the advertisement platform server 102A may place the advertisement in the media application. When displaying an interface of the media application, the electronic device 101 may display a commodity advertisement.

The advertisement platform server 102A may further provide an advertisement attribution service, and the advertisement attribution service provided by the advertisement platform server 102A may be referred to as a "self-attribution" service. After a user operates the electronic device 101 and clicks the commodity advertisement displayed in the media application, the electronic device 101 may send, to the advertisement platform server 102A, an advertisement event of clicking the commodity advertisement by the user. After the user clicks the commodity advertisement, the electronic device 101 jumps to display a commodity interface in the advertiser application. After the user operates the electronic device 101 to trigger a behavior like adding a commodity to favorites or paying for the commodity, the electronic device 101 may send, to the advertisement platform server 102A, an advertisement event of adding the commodity to favorites or paying for the commodity by the user, and the advertisement platform may perform advertisement attribution based on advertisement events sent by the electronic device 101.

In some other scenarios, the server may further include a third-party monitoring server 102B. To avoid a phenomenon like cheating when the advertisement platform provides an advertisement placement service and the advertisement attribution service, the third-party monitoring server 102B may be configured to provide a "third-party attribution" service. In the method, the electronic device 101 may send the advertisement events to the third-party monitoring server 102B, and the third-party monitoring server 102B may perform advertisement attribution based on the advertisement events sent by the electronic device 101. Alternatively, the electronic device 101 may send the advertisement events to the advertisement platform server 102A, and the advertisement platform server 102A forwards the advertisement events to the third-party monitoring server 102B.

It should be noted that the advertisement platform server 102A may be one server, or may be a server cluster including a plurality of servers, and the third-party monitoring server 102B may be one server, or may be a server cluster including a plurality of servers. This is not limited in embodiments of this application.

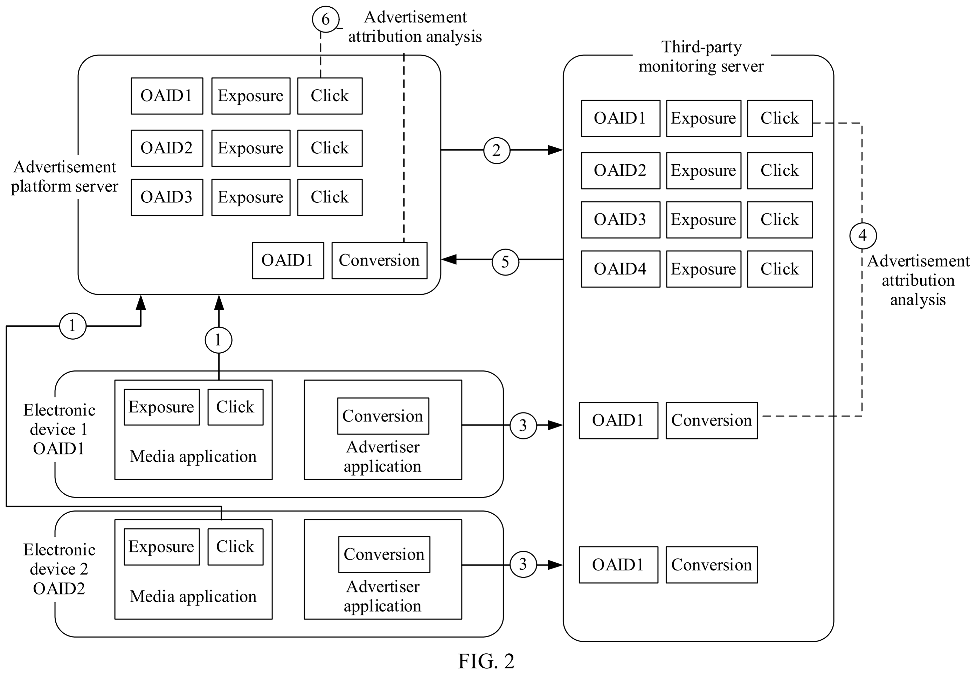

Based on the advertisement system shown in FIG. 1, FIG. 2 is a diagram of an advertisement attribution method. As shown in FIG. 2, after the advertisement platform server 102A places the advertisement in the media application, when the electronic device 101 displays an application interface of the media application, the application interface of the media application may include the advertisement, to complete advertisement exposure. After the user clicks the advertisement, the media application may send an advertisement event 1 to the advertisement platform server 102A, where the advertisement event 1 may include an open anonymous identifier (open anonymous identifier, OAID) of the electronic device and a click event identifier. As shown in FIG. 2, the advertisement platform server 102A may store an advertisement event sent by an electronic device. For example, the advertisement platform server 102A stores "exposure" and "click" events of advertisements sent by electronic devices whose identifiers are OAID1, OAID2, and OAID3. The advertisement platform server 102A may send the advertisement event 1 to the third-party monitoring server 102B. The third-party monitoring server 102B may also store the advertisement event sent by the electronic device. For example, the third-party monitoring server 102B stores the "exposure" and "click" events of the advertisements sent by the electronic devices whose identifiers are OAID1, OAID2, and OAID3. In addition, the third-party monitoring server 102B may further provide an advertisement attribution service for another advertisement platform, and the third-party monitoring server 102B may further store an advertisement event sent by another advertisement platform server or electronic device. For example, in FIG. 2, the third-party monitoring server may store an advertisement event sent by an electronic device whose identifier is OAID4. After the user operates the electronic device 101 to trigger a payment behavior for the commodity, advertisement conversion is completed. The advertiser application may send an advertisement event 2 to the third-party monitoring server 102B. The advertisement event 2 includes an OAID of the electronic device and a conversion event identifier. The third-party monitoring server 102B may store a conversion event sent by the electronic device whose identifier is the OAID1, and the third-party monitoring server 102B may perform advertisement attribution based on the OAID, the click event, and the conversion event of the electronic device. In addition, the third-party monitoring server 102B may forward the advertisement event 2 to the advertisement platform server 102A, and the advertisement platform server 102A may also store the conversion event sent by the electronic device whose identifier is OAID1, and perform advertisement attribution analysis based on the OAID, the click event, and the conversion event of the electronic device.

However, according to the foregoing advertisement attribution method, when sending the advertisement event to the server, the electronic device carries the OAID of the electronic device in the advertisement event. The OAID is an identifier used to perform advertisement tracking and personalized advertisement placement on a mobile device, and a user account of the user is in a one-to-one correspondence with the OAID. When different user accounts are logged in to different electronic devices, OAIDs in advertisement events sent by the different electronic devices to the server are accordingly different. When performing advertisement attribution, the server can only perform advertisement attribution analysis on the advertisement behavior based on the OAID, and cannot attribute advertisement events corresponding to a plurality of electronic devices to one link.

However, a difference between the commodity advertisement and an application recommendation advertisement or a news recommendation advertisement lies in that the commodity is an entity. After the user purchases the commodity, the commodity may be shared by a family. Alternatively, the user purchases the commodity for another user. Therefore, after the user is interested in the advertisement and views the commodity, the user may not immediately place an order for payment due to various reasons, but needs to communicate with a family member before placing the order for payment. In addition, a final order placement and payment behavior may not occur on the electronic device of the user who clicks the advertisement. Instead, the family member or the another user places the order for payment on another electronic device.

For example, the following describes two common commodity advertisement conversion scenarios.

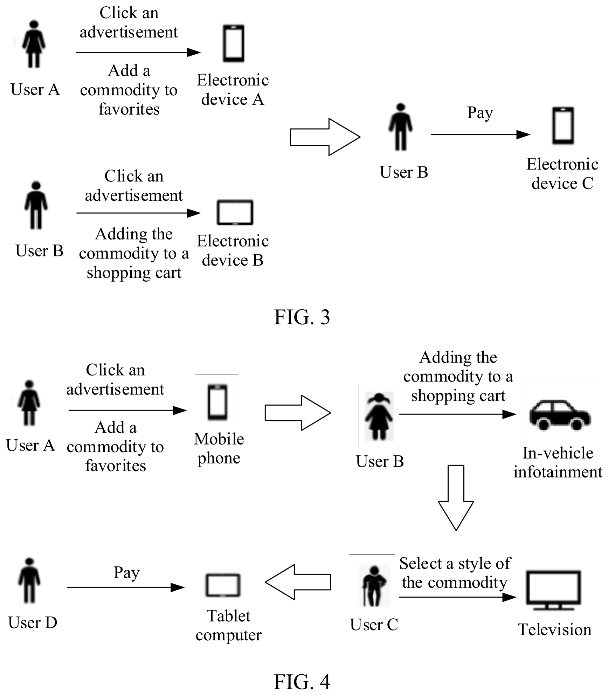

Scenario A: FIG. 3 is an example diagram of a commodity advertisement conversion scenario. As shown in FIG. 3, an account A of a user A is logged in to an electronic device A, and the user A sees an advertisement for a washing machine commodity in a media application on the electronic device A. After clicking the advertisement, the user A adds the washing machine commodity to favorites. However, because the user A is hesitant about a size and a function of the commodity, the user A does not place an order for payment. A user B, which is a family member of the user A, sees an advertisement for the washing machine commodity in a media application on an electronic device B. An account of the user B is logged in to the electronic device B. The user B adds the washing machine commodity to a shopping cart, and selects a "shirt washing" function. After the user A and the user B measure a size at home, the user A and the user B negotiate a color and a function of the commodity. The user B selects, on an electronic device C, a silver washing machine with "drying" and "shirt washing" functions to place an order for payment and complete a conversion behavior. The account of the user B is logged in to the electronic device C.

Scenario B: FIG. 4 is an example diagram of another commodity advertisement conversion scenario. As shown in FIG. 4, an account A of a user A is logged in to a mobile phone, the user A sees an advertisement for a child down jacket commodity in a media application on the mobile phone, and the user A clicks the advertisement and adds the child down jacket commodity to favorites. The account A of the user A is logged in to an in-vehicle infotainment. On the way that the user A picks up the child home, a user B (for example, the user B is the child of the user A) selects a color of the child down jacket in a shopping application running on the in-vehicle infotainment, and adds the selected child down jacket to a shopping cart. An account C of a user C is logged in to a television, and the user C is a family member of the user A. The user C selects a style of the child down jacket in a shopping application running on the television, but the television does not have a payment function. An account D of a user D is logged in to a tablet computer, and the user D places an order in a shopping application running on the tablet computer based on the color selected by the user B and the style selected by the user C, and makes a payment, to complete a conversion behavior.

According to the foregoing advertisement attribution method, in the scenario A, the electronic device A sends, to a server, an advertisement event indicating that the user A clicks the advertisement, and the electronic device B sends, to the server, an advertisement event indicating that the user B clicks the advertisement. When the server performs advertisement attribution, advertisement conversion between the electronic device A and the electronic device B is not completed because no payment operation is completed on the electronic device A and the electronic device B. After seeing an attribution result, an advertiser considers that the advertisements in the electronic device A and the electronic device B are invalid advertisements. However, it can be learned from the foregoing descriptions of the scenario A that advertisement displaying in the electronic device A and the electronic device B is also a node on a valid conversion path of a final payment behavior. It can be learned that the current advertisement attribution method is simple and has low accuracy.

Similarly, in the scenario B, the mobile phone sends, to a server, an advertisement event indicating that the user A clicks the advertisement and adds the child down jacket commodity to favorites; the in-vehicle infotainment sends, to the server, an advertisement event indicating that the user A adds the child down jacket commodity to the shopping cart; and the television sends, to the server, an advertisement event indicating that the user C selects the style of the child down jacket. The server performs advertisement attribution analysis based on the advertisement events sent by the mobile phone and the in-vehicle infotainment. Because a final conversion behavior occurs on the tablet computer to which the account D is logged in, an advertisement attribution result obtained by the server may be that the advertisements on the mobile phone, the in-vehicle infotainment, and the television are not converted, and the advertisements on the mobile phone, the in-vehicle infotainment, and the television are all invalid advertisements. However, in the scenario B, advertisement displaying in the mobile phone, the in-vehicle infotainment, and the television is a node on a valid conversion path of a final payment behavior on the tablet computer. It can be learned that an accurate advertisement attribution result cannot be obtained according to the current advertisement attribution method, which affects cost calculation of advertisement conversion, and finally affects advertisement revenue and traffic monetization.

In view of the foregoing problems, embodiments of this application provide an advertisement attribution method. The method may be applied to the advertisement system shown in FIG. 1. In the advertisement attribution method provided in embodiments of this application, an electronic device sends first advertisement event information to a server in response to a first operation triggered by a user, where the first operation is an operation related to an advertisement or an operation related to a commodity interface corresponding to the advertisement, and the first advertisement event information indicates a group account of a first group to which the electronic device belongs and a first advertisement event. After receiving the first advertisement event information sent by the electronic device, the server determines, based on the first advertisement event information, the first advertisement event corresponding to the group account of the first group to which the electronic device belongs, and stores the first advertisement event corresponding to the group account of the first group. The server obtains a plurality of advertisement events corresponding to the group account of the first group, where the plurality of advertisement events are determined based on a plurality of pieces of advertisement event information sent by a plurality of electronic devices in the first group, and the plurality of advertisement events include the first advertisement event. The server performs advertisement attribution analysis based on the plurality of advertisement events corresponding to the group account of the first group, to obtain a first advertisement attribution result. In this manner, the plurality of electronic devices may be associated with the same group account, so that the server may obtain, based on the group account, advertisement events sent by different electronic devices, perform advertisement attribution analysis based on the plurality of advertisement events corresponding to the group account, and attribute the advertisement events sent by the plurality of associated electronic devices in the same group to one link. In this way, a cross-device advertisement attribution method is provided, to improve accuracy of advertisement attribution.

The following describes an electronic device, and embodiments for using such an electronic device. The electronic device in embodiments of this application may be a tablet computer, a mobile phone, a vehicle-mounted device, an augmented reality (augmented reality, AR)/virtual reality (virtual reality, VR) device, a notebook computer, or an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

In some embodiments of this application, the electronic device may alternatively be a portable terminal device that further includes another function, for example, a personal digital assistant function and/or a music player function. An example embodiment of the portable terminal device includes but is not limited to a portable terminal device that carries iOS^{®}, Android^{®}, Microsoft^{®}, Harmony^{®}, or another operating system.

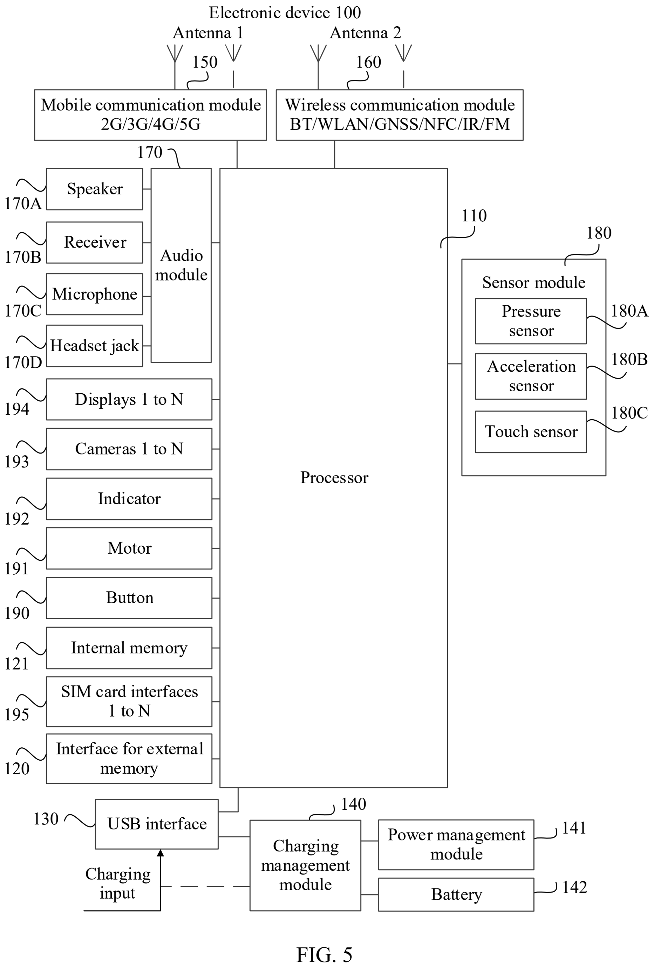

FIG. 5 is a diagram of a structure of an electronic device 100 according to an embodiment of this application. As shown in FIG. 5, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the electronic device 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be connected to the charger to charge the electronic device 100, or may be configured to transmit data between the electronic device 100 and a peripheral device. The charging management module 140 is configured to receive a charging input from the charger. The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through the lens, and is projected onto the light-sensitive element. The light-sensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format. In some embodiments, the electronic device 100 may include one or N cameras 193, where N is a positive integer greater than 1.

The internal memory 121 may be configured to store computer-executable program code, where the executable-program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, and may further include a nonvolatile memory, for example, at least one magnetic disk storage device, a flash storage device, or a universal flash storage (universal flash storage, UFS).

The interface 120 for external memory may be configured to connect to an external storage card, for example, a micro SD card, to extend a storage ability of the electronic device. The external storage card communicates with the processor 110 through the interface 120 for external memory, to implement a data storage function. For example, files such as pictures or videos are stored in the external storage card.

The electronic device 100 may implement an audio function, for example, music playing and recording, by using the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and may convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 form a touchscreen, which is also referred to as a "touch screen". The touch sensor 180C is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180C may alternatively be disposed on a surface of the electronic device 100 at a location different from that of the display 194.

The button 190 includes a power button, a volume button, and the like. The button 190 may be a mechanical button or a touch button. The electronic device 100 may receive a button input, and generate a button signal input related to a user setting and function control of the electronic device 100. The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effect. Touch vibration feedback effect may alternatively be user-defined. The indicator 192 may be an indicator light, and may indicate a charging status and a power change, or may indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the electronic device 100.

It may be understood that the components shown in FIG. 5 do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 5 may be further adjusted and modified.

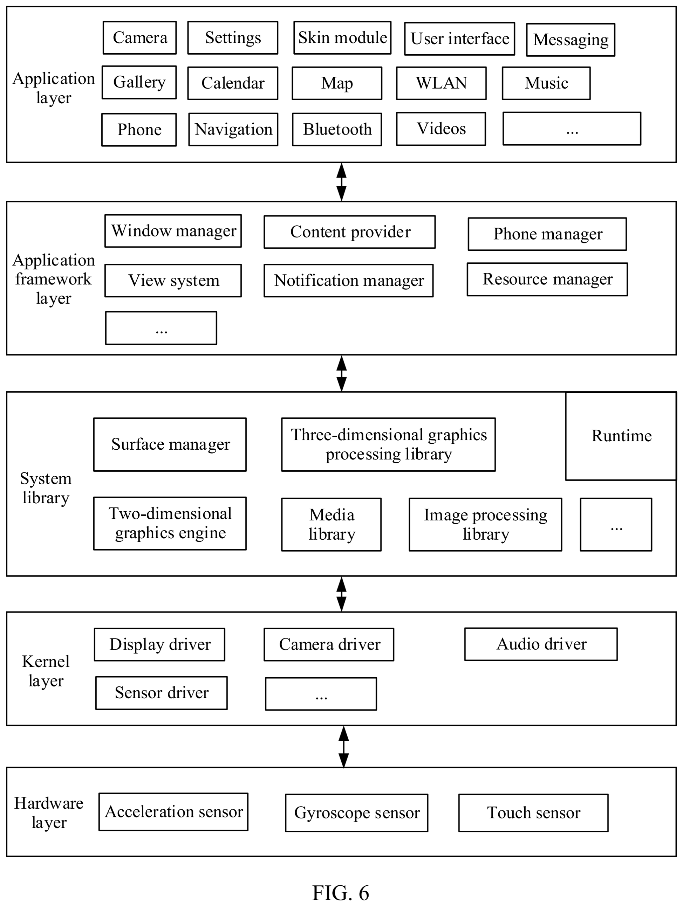

FIG. 6 is a block diagram of a software structure of an electronic device according to an embodiment of this application. As shown in FIG. 6, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 6, the application layer may include Camera, Settings, a skin module, a user interface (user interface, UI), a third-party application, and the like. The third-party application may include Gallery, Calendar, Phone, Map, Navigation, WLAN, Bluetooth, Music, Videos, Messaging, and the like. In this embodiment of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 6, the application framework layer may include a window manager, a content provider, a view system, a phone manager, a resource manager, and a notification manager.

The window manager is configured to manage a window program. The window manager may obtain a size of a display, determine whether there is a status bar, lock a screen, take a screenshot, and the like. The content provider is configured to: store and obtain data, and enable the data to be accessed by an application. The data may include a video, an image, an audio, calls that are made and received, a browsing history and bookmarks, a phone book, and the like.

The view system includes visual controls such as a control for displaying a text and a control for displaying an image. The view system may be configured to construct an application. A display interface may include one or more views. For example, a display interface including a notification icon of Messaging may include a text display view and a picture display view.

The phone manager is configured to provide a communication function of the electronic device, for example, management of a call status (including answering, declining, or the like).

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on the screen in a form of a dialog window. For example, text information is displayed in the status bar, an announcement is given, the electronic device vibrates, or an indicator light blinks.

A runtime includes a kernel library and a virtual machine. The runtime is responsible for scheduling and managing the operating system.

The kernel library includes two parts: a function that needs to be invoked in a Java language, and a kernel library of the operating system. The application layer and the application framework layer run in the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyroscope sensor, and a touch sensor.

It should be noted that the structures shown in FIG. 5 and FIG. 6 are merely examples of the electronic device provided in embodiments of this application, and cannot impose any limitation on the electronic device provided in embodiments of this application. During specific implementation, the electronic device may have more or fewer devices or modules than those in the structure shown in FIG. 5 or FIG. 6.

**The following describes an advertisement attribution method provided in embodiments of this application with reference to the accompanying drawings.**

First, a group device mapping relationship in the advertisement attribution method provided in embodiments of this application is described. In the advertisement attribution method provided in embodiments of this application, a plurality of electronic devices that are associated with each other may form a group. In embodiments of this application, a mapping relationship between the plurality of electronic devices and a group account may be constructed, and the mapping relationship between the plurality of electronic devices and the group account may be referred to as a group device mapping relationship. The plurality of electronic devices that are associated with each other may include a plurality of electronic devices of a same user, a plurality of electronic devices of a plurality of users that have an association relationship, and the like. For example, a plurality of electronic devices of a plurality of family members may correspond to one group account, and the group account may also be referred to as a family account. A mapping relationship between the plurality of electronic devices and the group account may be, for example, {group account 1: electronic device 1|electronic device 2|electronic device 3}.

In some embodiments, an identifier of the electronic device may be a unique device identifier (unique device identifier, UDID), an internet protocol (internet protocol, IP) address, or an open advertising identifier (open advertising identifier, OAID). The group account may be an identifier of a primary device in the plurality of electronic devices. The primary device may be a device that connects to or manages an electronic device other than the primary device in the plurality of electronic devices. When there are a plurality of management devices in the plurality of electronic devices, the primary device may be a device that has a management function earliest in the plurality of management devices. For example, in a smart home scenario, the group account may be an identifier of a home router, and the identifier of the home router may be a UDID or an IP address; or the group account may be an identifier of an electronic device on which an internet of things (internet of things, IOT) management platform application is installed, and the identifier of the electronic device may be a UDID or an OAID.

In some other embodiments, the group account may be a user-defined identifier, an identifier generated according to a preset rule, or a preconfigured default identifier.

For example, in the smart home scenario, there are a large quantity of home devices, and some electronic devices may not have OAIDs. In this embodiment of this application, the group account and identifiers of the plurality of electronic devices may be generated according to an open identifier (Open identifier, OPIN) mechanism. For example, an OPID of the family account may be generated by encrypting an identifier (identifier, ID) of the family account and an advertiser ID, that is, FamilyOpenID = func(FamilyID|CustomerID). The FamilyOpenID is the OpenID of the family account, func() indicates an encryption operation, and the FamilyID is the ID of the family account. For example, in the foregoing embodiment, the FamilyID may be a device ID of a primary home device, or a device ID of an electronic device having a management function, and the CustomerID is the advertiser ID. An OPID of the electronic device may be generated by encrypting a device ID of the electronic device and the advertiser ID, that is, Device0penID = func(DeviceID|CustomerID). The DeviceOpenID is the OpenID of the electronic device, and the DeviceID is the device ID of the electronic device. In this example, a mapping relationship between the electronic device and the family account may be {FamilyOpenID: DeviceOpenID1|DeviceOpenID2|DeviceOpenID3}.

In addition, degrees of contribution of advertisement displaying on different types of electronic devices to a final conversion behavior may be different. In this case, during advertisement attribution analysis, in addition to performing first attribution analysis based on an advertisement event corresponding to the group account, the server may further obtain a corresponding advertisement event based on a device type of the electronic device to perform second attribution analysis. During second attribution analysis, the OpenID of the electronic device may be generated by encrypting a device type ID and the advertiser ID, that is, Device0penID = func(DeviceTypelD|CustomerID).

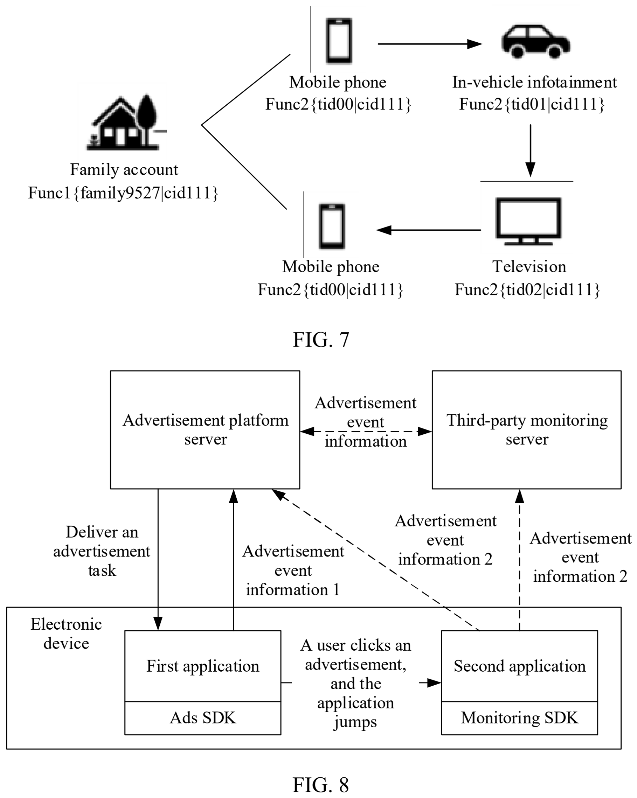

For example, FIG. 7 is an example diagram of a commodity conversion link in a smart home scenario using an OpenID mechanism according to an embodiment of this application. The scenario shown in FIG. 4 is used as an example. As shown in FIG. 7, in the smart home scenario, the ID of the family account is family9527, the OpenID of the family account is Func1 (family9527|cid111), an OpenID of the mobile phone is Func2 (tid00|cid111), an OpenID of the in-vehicle infotainment is Func2 (tid01|cid111), and an OpenID of the television is Func2 (tid02|cid111). Func1 and Func2 may be a same encryption algorithm or different encryption algorithms. In this example, the group device mapping relationship may be {Func1 (family9527|cid111): Func2 (tid00|cid111)|Func2 (tid01|cid111)|Func2 (tid02|cid111)}.

In the advertisement attribution method provided in embodiments of this application, an electronic device may display an advertisement. After a user triggers an operation related to the advertisement or a commodity corresponding to the advertisement, the electronic device may send advertisement event information to a server. The advertisement event information may indicate a group account of a group to which the electronic device belongs and an advertisement event. For example, the advertisement event information may include an advertisement event identifier, and the advertisement event information may further include the group account of the group to which the electronic device belongs and/or an identifier of the electronic device. The advertisement event includes any one of the following: clicking the advertisement, adding the commodity to favorites, adding a commodity to a shopping cart, or paying for a commodity. The operation that is related to the advertisement and that is triggered by the user may be that the user clicks the advertisement, the electronic device stays on an advertisement page for duration greater than preset duration, or the like. The operation that is related to the commodity corresponding to the advertisement and that is triggered by the user may be an operation like adding the commodity to favorites, adding the commodity to the shopping cart, or paying for the commodity. It may be understood that, in this embodiment of this application, the advertisement event information sent by the electronic device to the server is information about the advertisement event sent to the server. During implementation, the information about the advertisement event sent by the electronic device to the server may have another name. This is not limited in embodiments of this application.

Optionally, when the advertisement attribution method provided in embodiments of this application is applied to an advertisement system including a plurality of servers. Advertisement event information received by any server may be advertisement event information sent by an electronic device, or may be advertisement event information forwarded by another server after the another server receives the advertisement event information sent by the electronic device. For example, when the advertisement attribution method provided in embodiments of this application is applied to the advertisement system including the advertisement platform server 102A and the third-party monitoring server 102B shown in FIG. 1, after receiving the advertisement event information sent by the electronic device, the advertisement platform server 102A may send the advertisement event information to the third-party monitoring server 102B, and after receiving the advertisement event information sent by the electronic device, the third-party monitoring server 102B may also send the advertisement event information to the advertisement platform server 102A.

For example, the advertisement event identifier in the advertisement event information may include flag bits corresponding to a plurality of advertisement events. For example, the advertisement event identifier may include a flag bit corresponding to a click event, a flag bit corresponding to an event of adding the commodity to favorites, a flag bit of an event of adding the commodity to the shopping cart, a flag bit of a commodity payment event, and the like. The advertisement event information indicates an advertisement event whose flag bit value is 1. For example, when a flag bit value corresponding to the click event is 1, the advertisement event information indicates the click event. Alternatively, the advertisement event identifier may be a character string, and different values of the character string indicate different advertisement events. For example, when a value of the character string is "lmp", it indicates that the advertisement event is an exposure event; when a value of the character string is "click", it indicates that the advertisement event is a click event; and when a value of the character string is "pay", it indicates that the advertisement event is a commodity payment event.

In this embodiment of this application, the electronic device or the server may store the group device mapping relationship. When the electronic device stores the group device mapping relationship, the electronic device may send the group device mapping relationship to the server, or the electronic device may send the group device mapping relationship to the server when sending the advertisement event information to the server. When the advertisement system includes a plurality of servers, any server may also receive the group device mapping relationship sent by another server. For example, Table 1 is an example of the group device mapping relationship stored in the server according to this embodiment of this application.

**Table 1 Example of the group device mapping relationship**

| Group account | Identifier of an electronic device |
|---|---|
| FID1 | OAID1, OAID2, and OAID3 |
| FID2 | OAID4 and OAID5 |

As shown in Table 1, a group whose group account is FID1 includes electronic devices whose OAIDs are OAID1, OAID2, and OAID3, and a group whose group account is FID2 includes electronic devices whose OAIDs are OAID4 and OAID5.

After receiving the advertisement event information sent by the electronic device, the server determines, based on the advertisement event information sent by the electronic device, the advertisement event corresponding to the group account of the group to which the electronic device belongs, and stores the advertisement event corresponding to the group account.

Specifically, in a possible implementation, the advertisement event information sent by the electronic device includes an identifier of the advertisement event and an identifier of the electronic device. The server determines, based on the identifier of the advertisement event, the advertisement event corresponding to the electronic device; determines, based on the group device mapping relationship and the identifier of the electronic device, the group account of the group to which the electronic device belongs; and maps the advertisement event corresponding to the electronic device to the advertisement event corresponding to the group account of the group to which the electronic device belongs. The group device mapping relationship includes a mapping relationship between the group account of the group to which the electronic device belongs and the plurality of electronic devices in the group. For example, the group device mapping relationship is shown in Table 1. The server may perform search based on the relationship between the identifier of the electronic device and the group account shown in Table 1, to obtain the group account to which the electronic device belongs, and map the advertisement event corresponding to the electronic device to the advertisement event corresponding to the group account to which the electronic device belongs. In addition, it should be noted that, that the server determines, based on the advertisement event information, the advertisement event corresponding to the electronic device is specifically that an identifier of the advertisement event in the advertisement event information sent by the electronic device corresponds to the identifier of the electronic device, and it is determined, based on the correspondence between the identifier of the electronic device and the identifier of the advertisement event, that the electronic device indicated by the identifier of the electronic device corresponds to the advertisement event indicated by the identifier of the advertisement event.

In another possible implementation, if the advertisement event information sent by the electronic device includes the identifier of the advertisement event and the group account of the group to which the electronic device belongs, the server may directly determine, based on the identifier of the advertisement event and the group account of the group to which the electronic device belongs, the advertisement event corresponding to the group account to which the electronic device belongs. More specifically, the identifier of the advertisement event in the advertisement event information sent by the electronic device corresponds to the group account of the group to which the electronic device belongs, and it is determined, based on the correspondence between the identifier of the advertisement event and the group account, that the group account of the group to which the electronic device belongs corresponds to the advertisement event indicated by the identifier of the advertisement event. When performing advertisement attribution analysis, the server may obtain a plurality of advertisement events corresponding to the group account, and perform advertisement attribution analysis based on the plurality of advertisement events to obtain a first advertisement attribution result.

In an optional implementation, the server may preset a conversion event. For example, paying for the commodity is a conversion event, or following a store to which the commodity belongs is a conversion event. When the server receives the advertisement event information sent by the electronic device and determines that the advertisement event indicated in the advertisement event information is a conversion event, the server may determine the group account corresponding to the electronic device, obtain the plurality of advertisement events corresponding to the group account, and perform advertisement attribution analysis on the plurality of advertisement events corresponding to the group account, to obtain the first advertisement attribution result.

In another optional implementation, because not all advertisement placement can implement conversion, after receiving the advertisement event information sent by the electronic device, the server may determine the group account corresponding to the electronic device, obtain the plurality of advertisement events corresponding to the group account, and perform advertisement attribution analysis on the plurality of advertisement events corresponding to the group account, to obtain the first advertisement attribution result.

For example, in the smart home scenario shown in FIG. 7, the user may view a commodity advertisement in a browser on the mobile phone. After the user clicks and adds the commodity to favorites, the mobile phone sends, to the advertisement platform server, the advertisement event information 1 indicating that the user clicks the advertisement and the advertisement event information 2 indicating that the user adds the commodity to favorites. In addition, the advertisement event information 1 and the advertisement event information 2 include the group device mapping relationship and the OpenID of the mobile phone. When the in-vehicle infotainment is powered on, a splash advertisement may be displayed. The user clicks the splash advertisement and adds the commodity to the shopping cart. The in-vehicle infotainment sends, to the advertisement platform server, an advertisement event 3 indicating that the user clicks the advertisement and an advertisement event 4 indicating that the user adds the commodity to the shopping cart. In addition, the advertisement event 3 and the advertisement event 4 include the group device mapping relationship and the OpenID of the in-vehicle infotainment. When the television is powered on, a splash advertisement may be displayed. The user clicks the splash advertisement and places an order for the commodity. The television may send, to the advertisement platform server, an advertisement event 5 indicating that the user clicks the advertisement and an advertisement event 6 indicating that the user places an order for the commodity. In addition, the advertisement event 5 and the advertisement event 6 include the group device mapping relationship and the OpenID of the television. The user uses the mobile phone to pay for the commodity ordered on the television. The mobile phone may send, to the advertisement platform server, an advertisement event 7 indicating that the user pays for the commodity. The advertisement event 7 includes the group device mapping relationship and the OpenID of the mobile phone. The advertisement platform server may determine, based on the OpenID of the family account in the group device mapping relationship, OpenIDs of the plurality of electronic devices corresponding to the family account, and obtain the advertisement event 1 to the advertisement event 7 based on the OpenIDs of the plurality of electronic devices. The server performs advertisement attribution analysis based on the advertisement event 1 to the advertisement event 7, to attribute advertisement behaviors occurring on different devices to one link, so as to implement cross-device advertisement attribution.

In some embodiments, after determining, based on the advertisement event information sent by the electronic device, the advertisement event corresponding to the group account of the group to which the electronic device belongs, the server may further determine, based on the group device mapping relationship, the plurality of electronic devices included in the group, and send advertisement information corresponding to the advertisement event to the plurality of electronic devices, to distribute the advertisement corresponding to the advertisement event to the plurality of electronic devices. In this manner, the server may distribute an advertisement that the user is interested in to another electronic device associated with the user, to improve accuracy of advertisement placement. For example, if the server receives the advertisement event information sent by the electronic device, and the advertisement event information indicates that the user clicks the commodity advertisement 1, the server may determine, based on the group device mapping relationship, the plurality of electronic devices corresponding to the group account, and distribute the commodity advertisement 1 to the plurality of electronic devices. It should be noted that after the plurality of electronic devices receive the commodity advertisement 1 distributed by the server, the plurality of electronic devices may display the commodity advertisement 1 in a same manner or different manners. For example, the electronic device may display the commodity advertisement 1 on a leftmost screen, or the electronic device may display the commodity advertisement 1 in an application like a media application or a social application, or the electronic device may display the commodity advertisement 1 in a widget on a desktop. This is not limited in embodiments of this application.

In some embodiments of this application, the advertisement event information sent by the electronic device to the server may further include a device type identifier of the electronic device. After receiving the advertisement event information sent by the electronic device, the server may determine, based on the advertisement event information, an advertisement event corresponding to the device type of the electronic device, and store the advertisement event corresponding to the device type. The server may obtain a plurality of advertisement events corresponding to the device type of the electronic device, and perform advertisement attribution analysis based on the plurality of advertisement events corresponding to the device type of the electronic device, to obtain a second advertisement attribution result. For example, the server may store an advertisement event corresponding to a mobile phone-type electronic device, an advertisement event corresponding to a large screen-type electronic device, and the like, and the server may separately perform advertisement attribution analysis based on the advertisement event corresponding to the mobile phone-type electronic device and the advertisement event corresponding to the large screen-type electronic device. The advertisement attribution result obtained by the server by performing advertisement attribution analysis based on the device type may reflect degrees of contribution of advertisement displaying on different types of electronic devices to a final conversion behavior, so that types of electronic devices to which advertisements with different features are applicable for placement can be obtained through analysis. For example, after advertisement attribution analysis is performed based on the device type, the following advertisement attribution result may be obtained: The large screen-type electronic device has a low degree of conversion contribution to an app-type advertisement, and the large screen-type electronic device has a high degree of conversion contribution to a commodity-type advertisement.

Based on a same concept, the following describes an implementation in which the advertisement attribution method provided in embodiments of this application is applied to the advertisement system shown in FIG. 1. It can be learned from the foregoing descriptions that the advertisement system may include a plurality of electronic devices and an advertisement platform server, or the advertisement system may include a plurality of electronic devices, an advertisement platform server, and a third-party monitoring server.

For example, FIG. 8 is a diagram of an architecture of an advertisement system according to an embodiment of this application. As shown in FIG. 8, the advertisement system may include a plurality of electronic devices, an advertisement platform server, and a third-party monitoring server. The third-party monitoring server is an optional device. In addition, for ease of description, one electronic device is used as an example in FIG. 8. In a specific implementation, the advertisement system may include a plurality of electronic devices. For a method performed by each of the plurality of electronic devices, refer to a method performed by the electronic device described in this embodiment of this application. Details are not repeated.

As shown in FIG. 8, the electronic device includes a first application and a second application. The first application is an application on which an advertisement is placed, the first application may be a media application, a social application, or the like, and the second application is an advertiser application. An advertisement software development kit (Advertisement Software Development Kit, Ads SDK) may be integrated into the first application. The Ads SDK may be configured to: monitor whether a user clicks an advertisement, and send, to the advertisement platform server, advertisement event information 1 corresponding to a trigger operation of the user in the first application. A monitoring SDK may be integrated into the second application. The monitoring SDK may monitor a behavior performed by the user on a commodity corresponding to the advertisement, for example, adding a commodity to favorites, adding a commodity to a shopping cart, or making a payment. The monitoring SDK may send, to the advertisement platform server or the third-party monitoring server, advertisement event information 2 corresponding to a trigger operation of the user in the second application. The advertisement platform server may send the received advertisement event information 1 to the third-party monitoring server. The third-party monitoring server may also send the received advertisement event information 2 to the advertisement platform server. The advertisement platform server and/or the third-party monitoring server may perform, based on a group account, advertisement attribution analysis on advertisement events sent by a plurality of electronic devices, to obtain an advertisement attribution result.

It should be noted that, in the advertisement system shown in FIG. 8, that the first application on the electronic device sends the advertisement event information to the advertisement platform server and the second application on the electronic device sends the advertisement event information to the third-party monitoring server is merely an example rather than a limitation. In a specific implementation, the first application on the electronic device may alternatively send the advertisement event information to the third-party monitoring server, and the second application may alternatively send the advertisement event information to the advertisement platform server. For example, a transmission manner of the advertisement event information may be adjusted based on a service requirement of an advertiser. For example, when the advertiser requires a "self-attribution" service of the advertisement platform, both the first application and the second application on the electronic device send the advertisement event information to the advertisement platform server.

Based on the advertisement system shown in FIG. 8, the following uses the commodity advertisement conversion scenario shown in FIG. 3 as an example to further describe, with reference to the following Example 1 to Example 4, implementations of the advertisement attribution method provided in embodiments of this application in different advertisement system architectures. In the following Example 1 to Example 4, a first user may be the user A in FIG. 3, a second user may be the user B in FIG. 3, a first electronic device may be the electronic device A in FIG. 3, a second electronic device may be the electronic device B in FIG. 3, and a third electronic device may be the electronic device C in FIG. 3.

**Example 1:** The advertisement system includes a plurality of electronic devices and an advertisement platform server, the advertisement platform server stores a group device mapping relationship, and the advertisement platform server performs advertisement attribution analysis.

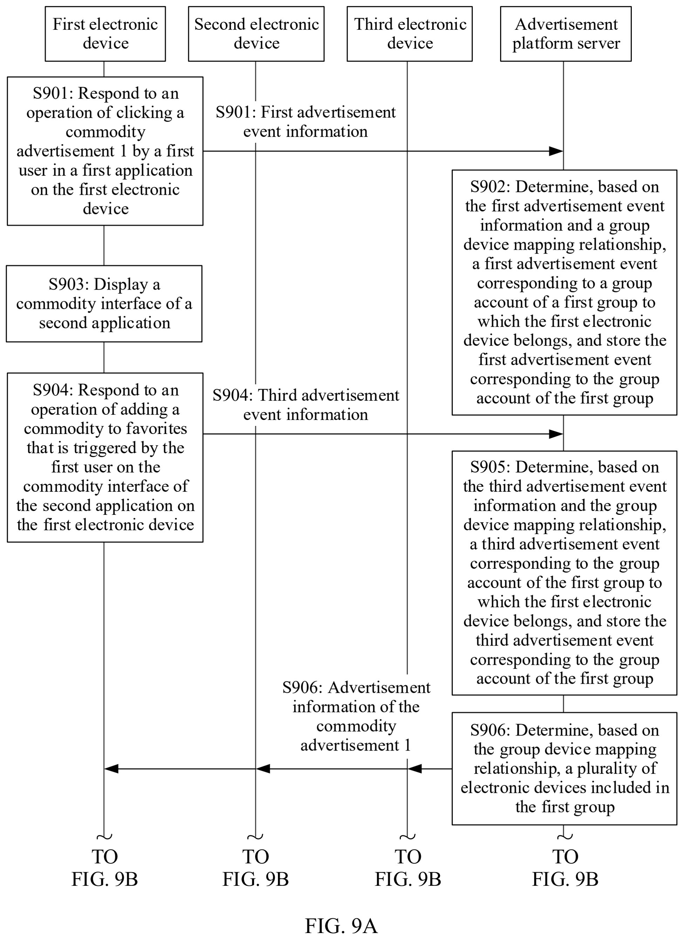

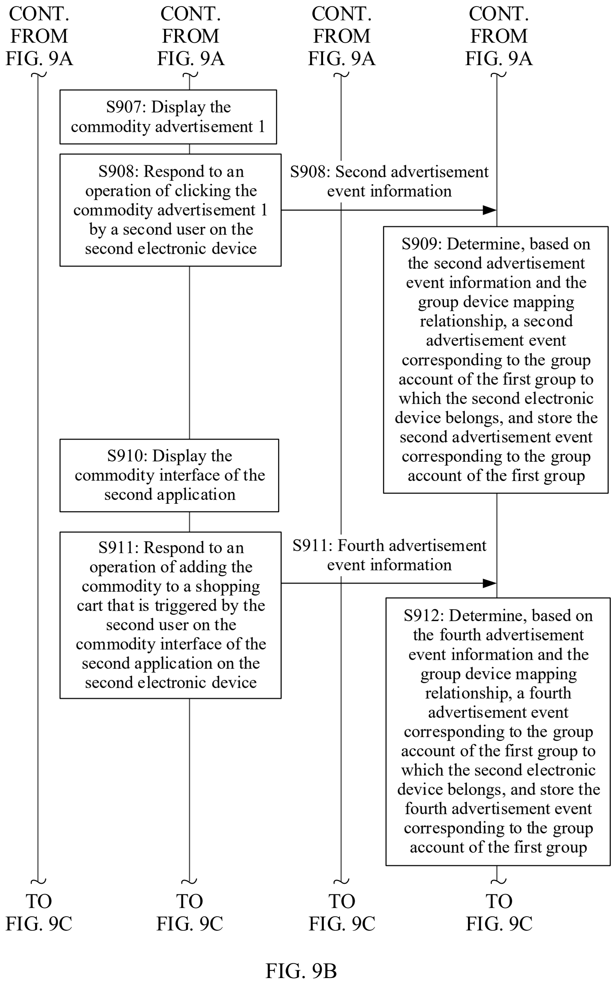

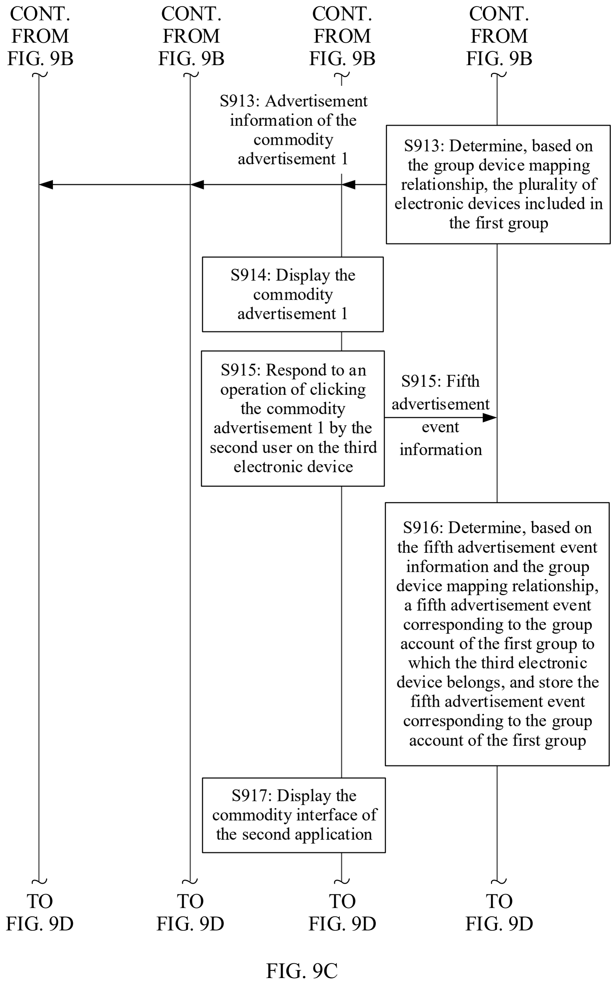

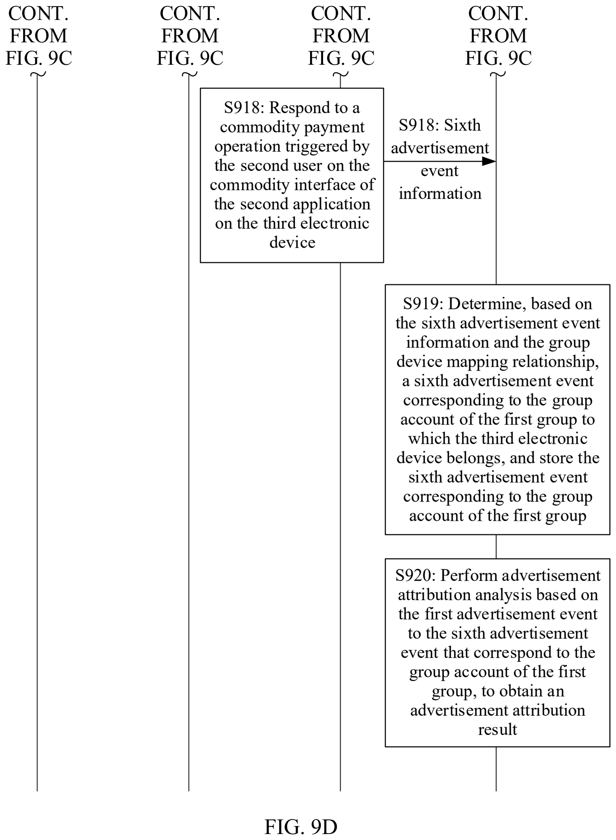

FIG. 9A to FIG. 9D are a flowchart of an advertisement attribution method according to an embodiment of this application. As shown in FIG. 9A to FIG. 9D, the method includes the following steps.

S901: In response to an operation of clicking a commodity advertisement 1 by the first user in a first application on the first electronic device, the first application on the first electronic device sends first advertisement event information to the advertisement platform server.

The first advertisement event information includes an identifier of the first electronic device and an identifier of a first advertisement event, and the first advertisement event is an advertisement click event.

Optionally, S901 may be performed by the Ads SDK integrated into the first application installed on the electronic device shown in FIG. 8.

S902: The advertisement platform server determines, based on the first advertisement event information and the group device mapping relationship, the first advertisement event corresponding to a group account of a first group to which the first electronic device belongs, and stores the first advertisement event corresponding to the group account of the first group.

For example, it is assumed that the group device mapping relationship stored in the advertisement platform server is shown in Table 1, and the identifier of the first electronic device is OAID1. After receiving the first advertisement event information sent by the first electronic device, the advertisement platform server may determine, based on the identifier of the first electronic device and the group device mapping relationship, that the group account of the first group is FID1, and the advertisement platform server may store a first advertisement event corresponding to FID1.

S903: The first electronic device displays a commodity interface of a second application.

For example, the commodity advertisement 1 in S901 may be the advertisement for the XX brand washing machine commodity in the commodity advertisement conversion scenario shown in FIG. 3; in this case, the commodity interface of the second application in S903 may be an interface of the XX brand washing machine commodity.

S904: In response to an operation of adding the commodity to favorites that is triggered by the first user on the commodity interface of the second application on the first electronic device, the second application on the first electronic device sends third advertisement event information to the advertisement platform server.

The third advertisement event information includes the identifier of the first electronic device and an identifier of a third advertisement event, and the third advertisement event is an advertisement event of adding the commodity to favorites.

Optionally, S904 may be performed by the third-party monitoring SDK integrated into the second application installed on the electronic device shown in FIG. 8.

S905: The advertisement platform server determines, based on the third advertisement event information and the group device mapping relationship, the third advertisement event corresponding to the group account of the first group to which the first electronic device belongs, and stores the third advertisement event corresponding to the group account of the first group.

S906: The advertisement platform server determines, based on the group device mapping relationship, a plurality of electronic devices included in the first group, and the advertisement platform server sends advertisement information of the commodity advertisement 1 to the plurality of electronic devices included in the first group.

For example, it is assumed that the group device mapping relationship stored in the advertisement platform server is in Table 1, and the identifier of the first electronic device is OAID1. In this case, the server determines, based on the group device mapping relationship in Table 1, that the group account of the first group to which the first electronic device belongs is FID1, and FID1 corresponds to three electronic devices: OAID1, OAID2, and OAID3. The advertisement platform server may separately deliver the commodity advertisement 1 to the electronic devices whose identifiers are OAID1, OAID2, and OAID3.

S907: The second electronic device displays the commodity advertisement 1.

For example, after receiving the commodity advertisement 1 delivered by the advertisement platform server, the second electronic device may display the commodity advertisement 1 on a leftmost screen of the second electronic device.

S908: In response to an operation of clicking the commodity advertisement 1 by the second user on the second electronic device, the second electronic device sends second advertisement event information to the advertisement platform server.

The second advertisement event information includes an identifier of the second electronic device and an identifier of a second advertisement event, and the second advertisement event is an advertisement click event.

For example, when the second electronic device displays the commodity advertisement 1 on the leftmost screen, S908 may be performed by an Ads SDK on the leftmost screen of the second electronic device.

S909: The advertisement platform server determines, based on the second advertisement event information and the group device mapping relationship, the second advertisement event corresponding to the group account of the first group to which the second electronic device belongs, and stores the second advertisement event corresponding to the group account of the first group.

S910: The second electronic device displays the commodity interface of the second application.

S911: In response to an operation of adding the commodity to a shopping cart that is triggered by the second user on the commodity interface of the second application on the second electronic device, the second application on the second electronic device sends fourth advertisement event information to the advertisement platform server.

The fourth advertisement event information includes the identifier of the second electronic device and an identifier of a fourth advertisement event, and the fourth advertisement event is an advertisement event of adding the commodity to the shopping cart.

Optionally, S911 may be performed by a monitoring SDK integrated into the second application installed on the second electronic device.

S912: The advertisement platform server determines, based on the fourth advertisement event information and the group device mapping relationship, the fourth advertisement event corresponding to the group account of the first group to which the second electronic device belongs, and stores the fourth advertisement event corresponding to the group account of the first group.

S913: The advertisement platform server determines, based on the group device mapping relationship, the plurality of electronic devices included in the first group, and the advertisement platform server sends the advertisement information of the commodity advertisement 1 to the plurality of electronic devices included in the first group.

S914: The third electronic device displays the commodity advertisement 1.

For example, when starting a video application, the third electronic device may display the commodity advertisement 1 on an application interface of the video application.

S915: In response to an operation of clicking the commodity advertisement 1 by the second user on the third electronic device, the third electronic device sends fifth advertisement event information to the advertisement platform server.

The fifth advertisement event information may include an identifier of the third electronic device and an identifier of a fifth advertisement event, and the fifth advertisement event is an advertisement click event.

Optionally, S915 may be performed by an Ads SDK integrated into the video application on the third electronic device.

S916: The advertisement platform server determines, based on the fifth advertisement event information and the group device mapping relationship, the fifth advertisement event corresponding to the group account of the first group to which the third electronic device belongs, and stores the fifth advertisement event corresponding to the group account of the first group.

S917: The third electronic device displays the commodity interface of the second application.

S918: In response to a commodity payment operation triggered by the second user on the commodity interface of the second application on the third electronic device, the second application on the third electronic device sends sixth advertisement event information to the advertisement platform server.

The sixth advertisement event information includes the identifier of the third electronic device and an identifier of a sixth advertisement event, and the sixth advertisement event is a commodity payment event.

Optionally, S918 may be performed by a monitoring SDK integrated into the second application installed on the third electronic device.

S919: The advertisement platform server determines, based on the sixth advertisement event information and the group device mapping relationship, the sixth advertisement event corresponding to the group account of the first group to which the third electronic device belongs, and stores the sixth advertisement event corresponding to the group account of the first group.

S920: The advertisement platform server performs advertisement attribution analysis based on the first advertisement event to the sixth advertisement event that correspond to the group account of the first group, to obtain an advertisement attribution result.

For example, the advertisement attribution result obtained by the advertisement platform may be shown in Table 2.

| Electronic device | Advertisement event |
|---|---|
| OAID1 | Click the advertisement and add the commodity to favorites |
| OAID2 | Click the advertisement and add the commodity to the shopping cart |
| OAID3 | Click the advertisement and pay for the commodity |

It can be learned from the foregoing example that the advertisement platform server may associate all nodes on a valid commodity conversion path based on the group account, and attribute advertisement events sent by the plurality of electronic devices to one link, to improve accuracy of advertisement attribution.

**Example 2:** The advertisement system includes a plurality of electronic devices, an advertisement platform server, and a third-party monitoring server. The advertisement platform server stores a group device mapping relationship, and the advertisement platform server may perform advertisement attribution analysis.

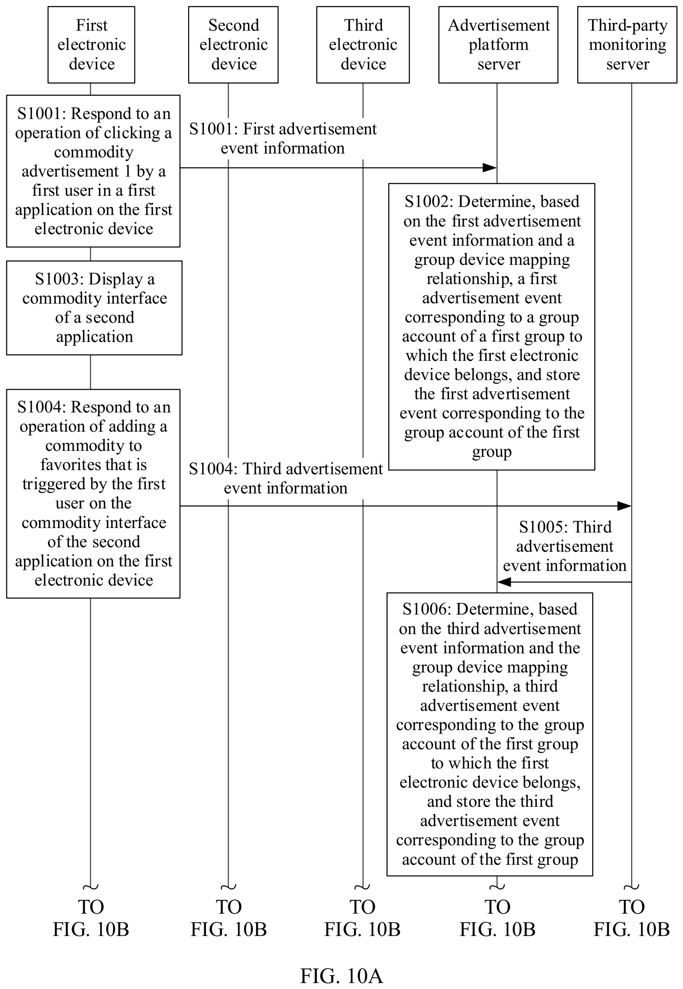

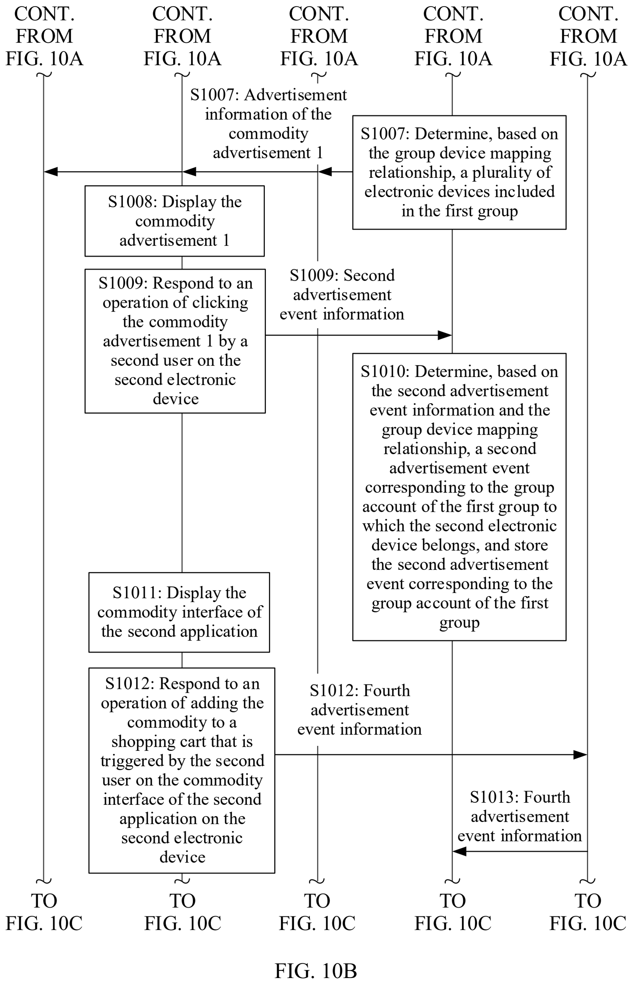

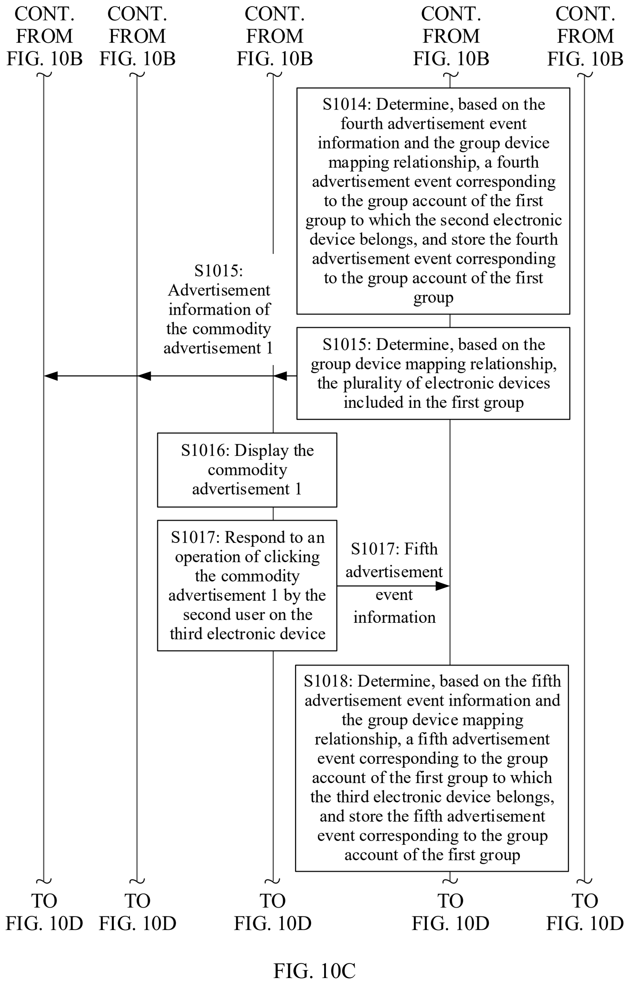

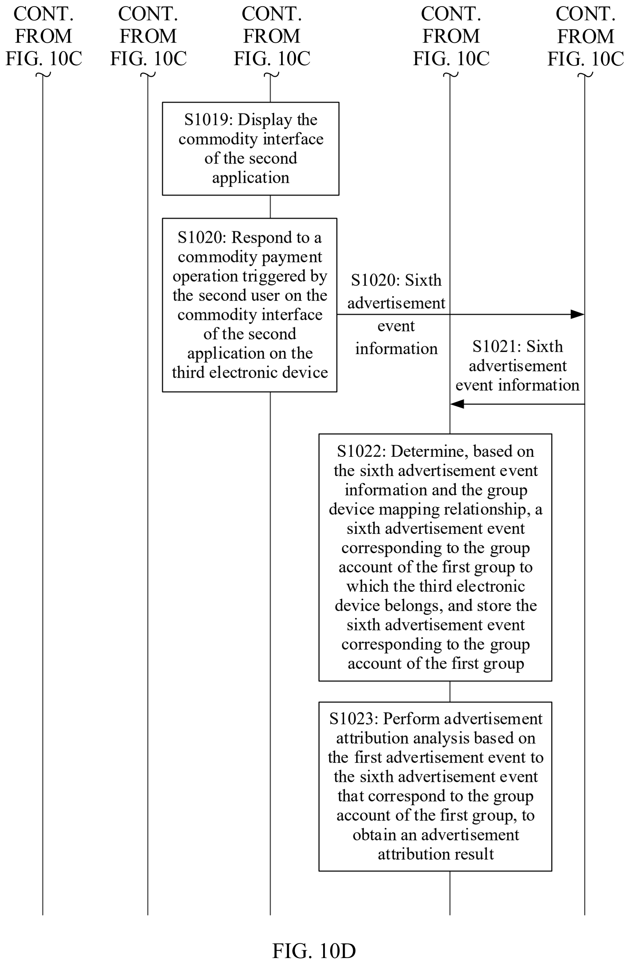

FIG. 10A to FIG. 10D are a flowchart of an advertisement attribution method according to an embodiment of this application. As shown in FIG. 10A to FIG. 10D, the method includes the following steps.

S1001: In response to an operation of clicking a commodity advertisement 1 by the first user in a first application on the first electronic device, the first application on the first electronic device sends first advertisement event information to the advertisement platform server.

The first advertisement event information includes an identifier of the first electronic device and an identifier of a first advertisement event, and the first advertisement event is an advertisement click event.

Optionally, S1001 may be performed by the Ads SDK integrated into the first application installed on the electronic device shown in FIG. 8.

S1002: The advertisement platform server determines, based on the first advertisement event information and the group device mapping relationship, the first advertisement event corresponding to a group account of a first group to which the first electronic device belongs, and stores the first advertisement event corresponding to the group account of the first group.

For example, it is assumed that the group device mapping relationship stored in the advertisement platform server is shown in Table 1, and the identifier of the first electronic device is OAID1. After receiving the first advertisement event information sent by the first electronic device, the advertisement platform server may determine, based on the identifier of the first electronic device and the group device mapping relationship, that the group account of the first group to which the first electronic device belongs is FID1, and the advertisement platform server may store the first advertisement event corresponding to FID1.

S1003: The first electronic device displays a commodity interface of a second application.

For example, the commodity advertisement 1 in S1001 may be the advertisement for the XX brand washing machine commodity in the commodity advertisement conversion scenario shown in FIG. 3; in this case, the commodity interface of the second application in S1003 may be an interface of the XX brand washing machine commodity.

S1004: In response to an operation of adding the commodity to favorites that is triggered by the first user on the commodity interface of the second application on the first electronic device, the second application on the first electronic device sends third advertisement event information to the third-party monitoring server.

The third advertisement event information includes the identifier of the first electronic device and an identifier of a third advertisement event, and the third advertisement event is an advertisement event of adding the commodity to favorites.

Optionally, S1004 may be performed by the monitoring SDK integrated into the second application installed on the electronic device shown in FIG. 8.

S1005: The third-party monitoring server sends the third advertisement event information to the advertisement platform server.

S1006: The advertisement platform server determines, based on the third advertisement event information and the group device mapping relationship, the third advertisement event corresponding to the group account of the first group to which the first electronic device belongs, and stores the third advertisement event corresponding to the group account of the first group.

S1007: The advertisement platform server determines, based on the group device mapping relationship, a plurality of electronic devices included in the first group, and the advertisement platform server sends advertisement information of the commodity advertisement 1 to the plurality of electronic devices included in the first group.

For example, it is assumed that the group device mapping relationship stored in the advertisement platform server is Table 1, and the identifier of the first electronic device is OAID1. In this case, the server determines, based on the group device mapping relationship in Table 1, that the group account of the first group to which the first electronic device belongs is FID1, and FID1 corresponds to three electronic devices: OAID1, OAID2, and OAID3. The advertisement platform server may separately deliver the commodity advertisement 1 to the electronic devices whose identifiers are OAID1, OAID2, and OAID3.

S1008: The second electronic device displays the commodity advertisement 1.

For example, after receiving the commodity advertisement 1 delivered by the advertisement platform server, the second electronic device may display the commodity advertisement 1 on a leftmost screen of the second electronic device.

S1009: In response to an operation of clicking the commodity advertisement 1 by the second user on the second electronic device, the second electronic device sends second advertisement event information to the advertisement platform server.

The second advertisement event information includes an identifier of the second electronic device and an identifier of a second advertisement event, and the second advertisement event is an advertisement click event.

For example, when the second electronic device displays the commodity advertisement 1 on the leftmost screen, S1009 may be performed by an Ads SDK on the leftmost screen of the second electronic device.

S1010: The advertisement platform server determines, based on the second advertisement event information and the group device mapping relationship, the second advertisement event corresponding to the group account of the first group to which the second electronic device belongs, and stores the second advertisement event corresponding to the group account of the first group.

S1011: The second electronic device displays the commodity interface of the second application.

S1012: In response to an operation of adding the commodity to a shopping cart that is triggered by the second user on the commodity interface of the second application on the second electronic device, the second application on the second electronic device sends fourth advertisement event information to the third-party monitoring server.

The fourth advertisement event information includes the identifier of the second electronic device and an identifier of a fourth advertisement event, and the fourth advertisement event is an advertisement event of adding the commodity to the shopping cart.

Optionally, S1012 may be performed by a monitoring SDK integrated into the second application on the second electronic device.

S1013: The third-party monitoring server sends the fourth advertisement event information to the advertisement platform server.

S1014: The advertisement platform server determines, based on the fourth advertisement event information and the group device mapping relationship, the fourth advertisement event corresponding to the group account of the first group to which the second electronic device belongs, and stores the fourth advertisement event corresponding to the group account of the first group.

S1015: The advertisement platform server determines, based on the group device mapping relationship, the plurality of electronic devices included in the first group, and the advertisement platform server sends the advertisement information of the commodity advertisement 1 to the plurality of electronic devices included in the first group.

S1016: The third electronic device displays the commodity advertisement 1.

For example, when starting a video application, the third electronic device may display the commodity advertisement 1 on an application interface of the video application.

S1017: In response to an operation of clicking the commodity advertisement 1 by the second user on the third electronic device, the third electronic device sends fifth advertisement event information to the advertisement platform server.

The fifth advertisement event information includes an identifier of the third electronic device and an identifier of a fifth advertisement event, and the fifth advertisement event is an advertisement click event.

For example, when the third electronic device displays the commodity advertisement 1 on the application interface of the video application, S1013 may be performed by an Ads SDK integrated into the video application.

S1018: The advertisement platform server determines, based on the fifth advertisement event information and the group device mapping relationship, the fifth advertisement event corresponding to the group account of the first group to which the third electronic device belongs, and stores the fifth advertisement event corresponding to the group account of the first group.

S1019: The third electronic device displays the commodity interface of the second application.

S1020: In response to a commodity payment operation triggered by the second user on the commodity interface of the second application on the third electronic device, the second application on the third electronic device sends sixth advertisement event information to the third-party monitoring server.

The sixth advertisement event information includes the identifier of the third electronic device and an identifier of a sixth advertisement event, and the sixth advertisement event is a commodity payment event.

Optionally, S1020 may be performed by a monitoring SDK integrated into the second application on the third electronic device.

S1021: The third-party monitoring server sends the sixth advertisement event information to the advertisement platform server.

S1022: The advertisement platform server determines, based on the sixth advertisement event information and the group device mapping relationship, the sixth advertisement event corresponding to the group account of the first group to which the third electronic device belongs, and stores the sixth advertisement event corresponding to the group account of the first group.

S1023: The advertisement platform server performs advertisement attribution analysis based on the first advertisement event to the sixth advertisement event that correspond to the group account of the first group, to obtain an advertisement attribution result.

**Example 3:** The advertisement system includes a plurality of electronic devices, an advertisement platform server, and a third-party monitoring server. The advertisement platform server stores a group device mapping relationship, and the third-party monitoring server may perform advertisement attribution analysis.

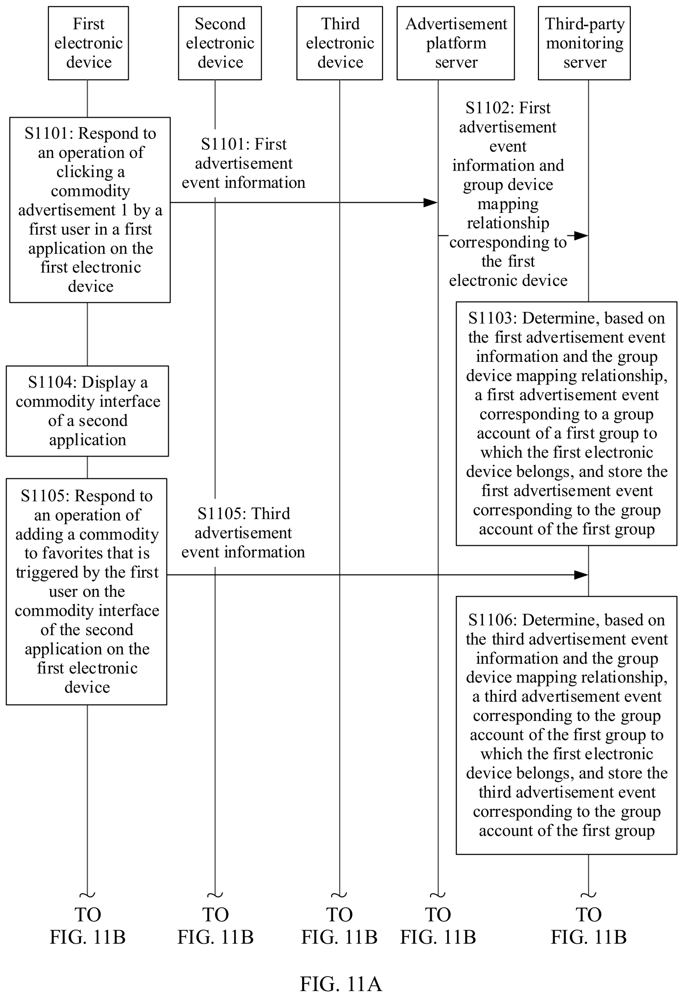

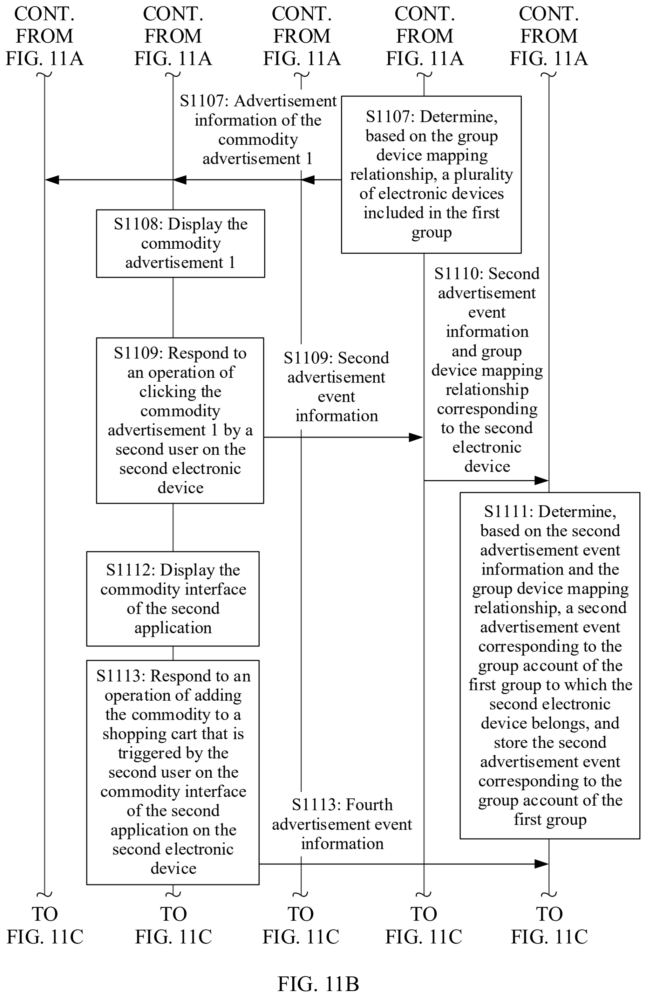

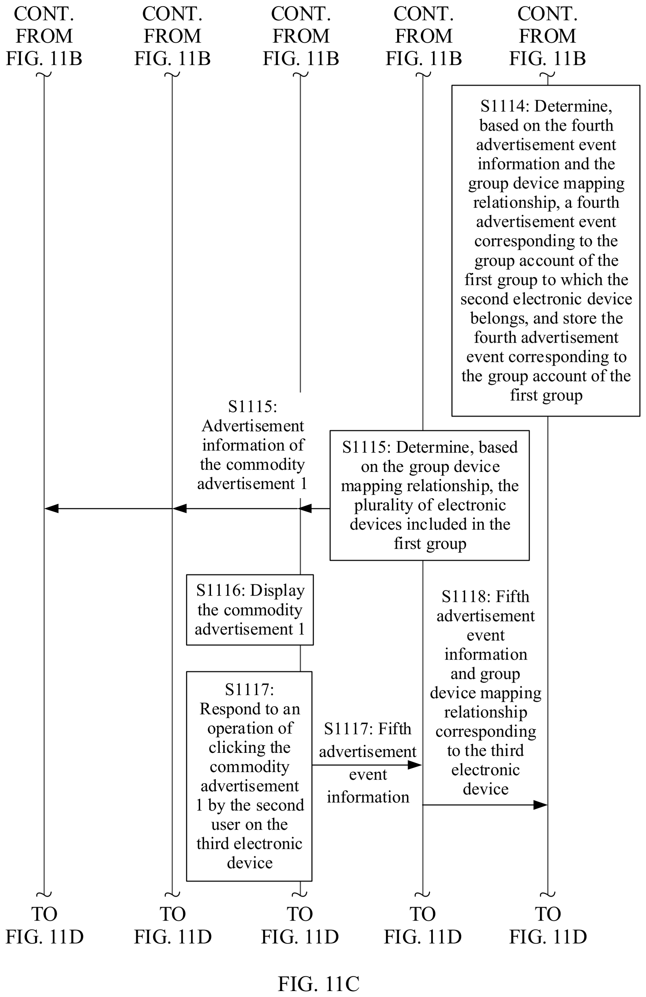

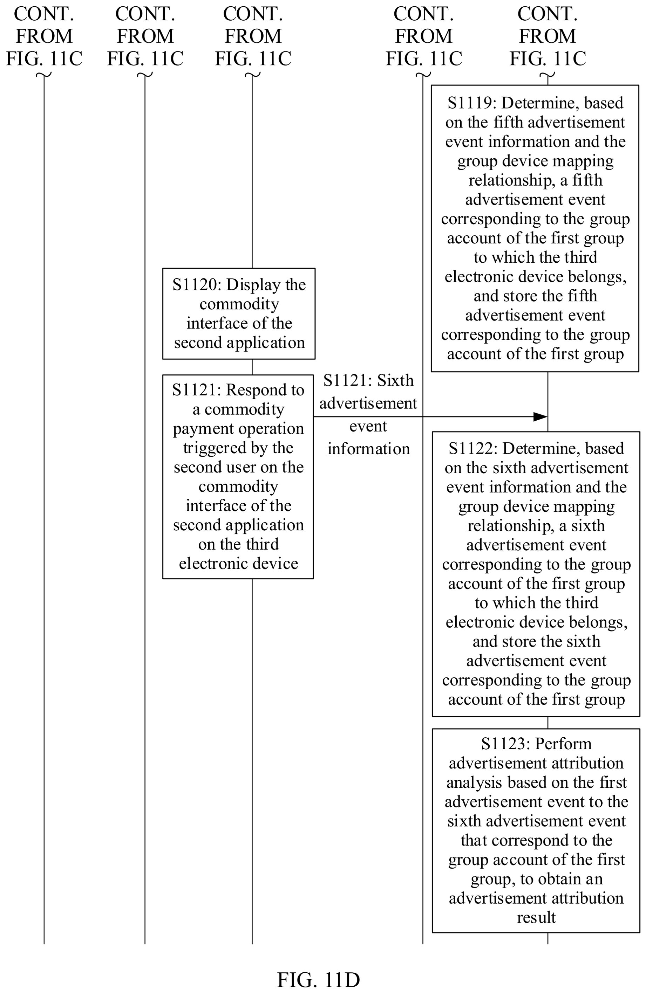

FIG. 11A to FIG. 11D are a flowchart of an advertisement attribution method according to an embodiment of this application. As shown in FIG. 11A to FIG. 11D, the method includes the following steps.

S1101: In response to an operation of clicking a commodity advertisement 1 by the first user in a first application on the first electronic device, the first application on the first electronic device sends first advertisement event information to the advertisement platform server.

The first advertisement event information includes an identifier of the first electronic device and an identifier of a first advertisement event, and the first advertisement event is an advertisement click event.

Optionally, S1101 may be performed by the Ads SDK integrated into the first application on the electronic device shown in FIG. 8.

S1102: The advertisement platform server sends the first advertisement event information and the group device mapping relationship corresponding to the first electronic device to the third-party monitoring server.

S1103: The third-party monitoring server determines, based on the first advertisement event information and the group device mapping relationship, the first advertisement event corresponding to a group account of a first group to which the first electronic device belongs, and stores the first advertisement event corresponding to the group account of the first group.

For example, it is assumed that the group device mapping relationship received by the third-party monitoring server is shown in Table 1, and the identifier of the first electronic device is OAID1. After receiving the first advertisement event information sent by the advertisement platform server, the third-party monitoring server may determine, based on the identifier of the first electronic device and the group device mapping relationship, that the group account of the first group is FID1, and the third-party monitoring server may store the first advertisement event corresponding to FID1.

S1104: The first electronic device displays a commodity interface of a second application.

For example, the commodity advertisement 1 in S1101 may be the advertisement for the XX brand washing machine commodity in the commodity advertisement conversion scenario shown in FIG. 3; in this case, the commodity interface of the second application in S1104 may be an interface of the XX brand washing machine commodity.

S1105: In response to an operation of adding the commodity to favorites that is triggered by the first user on the commodity interface of the second application on the first electronic device, the second application on the first electronic device sends third advertisement event information to the third-party monitoring server.

The third advertisement event information includes the identifier of the first electronic device and an identifier of a third advertisement event, and the third advertisement event is an advertisement event of adding the commodity to favorites.

Optionally, S1105 may be performed by the monitoring SDK integrated into the first application on the electronic device shown in FIG. 8.

S1106: The third-party monitoring server determines, based on the third advertisement event information and the group device mapping relationship, the third advertisement event corresponding to the group account of the first group to which the first electronic device belongs, and stores the third advertisement event corresponding to the group account of the first group.

S1107: The advertisement platform server determines, based on the group device mapping relationship, a plurality of electronic devices included in the first group, and the advertisement platform server sends advertisement information of the commodity advertisement 1 to the plurality of electronic devices included in the first group.

For example, it is assumed that the group device mapping relationship stored in the advertisement platform server is Table 1, and the identifier of the first electronic device is OAID1. In this case, the server determines, based on the group device mapping relationship in Table 1, that the group account of the first group to which the first electronic device belongs is FID1, and FID1 corresponds to three electronic devices: OAID1, OAID2, and OAID3. The advertisement platform server may separately deliver the commodity advertisement 1 to the electronic devices whose identifiers are OAID1, OAID2, and OAID3.

S1108: The second electronic device displays the commodity advertisement 1.

For example, after receiving the commodity advertisement 1 delivered by the advertisement platform server, the second electronic device may display the commodity advertisement 1 on a leftmost screen of the second electronic device.

S1109: In response to an operation of clicking the commodity advertisement 1 by the second user on the second electronic device, the second electronic device sends second advertisement event information to the advertisement platform server.

The second advertisement event information includes an identifier of the second electronic device and an identifier of a second advertisement event, and the second advertisement event is an advertisement click event.

For example, when the second electronic device displays the commodity advertisement 1 on the leftmost screen, S1109 may be performed by an Ads SDK on the leftmost screen of the second electronic device.

S1110: The advertisement platform server sends the second advertisement event information and the group device mapping relationship corresponding to the second electronic device to the third-party monitoring server.

S1111: The third-party monitoring server determines, based on the second advertisement event information and the group device mapping relationship, the second advertisement event corresponding to the group account of the first group to which the second electronic device belongs, and stores the second advertisement event corresponding to the group account of the first group.

S1112: The second electronic device displays the commodity interface of the second application.

S1113: In response to an operation of adding the commodity to a shopping cart that is triggered by the second user on the commodity interface of the second application on the second electronic device, the second application on the second electronic device sends fourth advertisement event information to the third-party monitoring server.

The fourth advertisement event information includes the identifier of the second electronic device and an identifier of a fourth advertisement event, and the fourth advertisement event is an advertisement event of adding the commodity to the shopping cart.

Optionally, S1113 may be performed by a monitoring SDK integrated into the second application on the second electronic device.

S1114: The third-party monitoring server determines, based on the fourth advertisement event information and the group device mapping relationship, the fourth advertisement event corresponding to the group account of the first group to which the second electronic device belongs, and stores the fourth advertisement event corresponding to the group account of the first group.

S1115: The advertisement platform server determines, based on the group device mapping relationship, the plurality of electronic devices included in the first group, and the advertisement platform server sends the advertisement information of the commodity advertisement 1 to the plurality of electronic devices included in the first group.

S1116: The third electronic device displays the commodity advertisement 1.

For example, when starting a video application, the third electronic device may display the commodity advertisement 1 on an application interface of the video application.

S1117: In response to an operation of clicking the commodity advertisement 1 by the second user on the third electronic device, the third electronic device sends fifth advertisement event information to the advertisement platform server.

The fifth advertisement event information includes an identifier of the third electronic device and an identifier of a fifth advertisement event, and the fifth advertisement event is an advertisement click event.

For example, when the third electronic device displays the commodity advertisement 1 on the application interface of the video application, S1117 may be performed by an Ads SDK integrated into the video application.

S1118: The advertisement platform server sends the fifth advertisement event and the group device mapping relationship corresponding to the third electronic device to the third-party monitoring server.

S1119: The third-party monitoring server determines, based on the fifth advertisement event information and the group device mapping relationship, the fifth advertisement event corresponding to the group account of the first group to which the third electronic device belongs, and stores the fifth advertisement event corresponding to the group account of the first group.

S1120: The third electronic device displays the commodity interface of the second application.

S1121: In response to a commodity payment operation triggered by the second user on the commodity interface of the second application on the third electronic device, the second application on the third electronic device sends sixth advertisement event information to the third-party monitoring server.

The sixth advertisement event information includes the identifier of the third electronic device and an identifier of a sixth advertisement event, and the sixth advertisement event is a commodity payment event.

Optionally, S1121 may be performed by a monitoring SDK integrated into the second application on the third electronic device.

S1122: The third-party monitoring server determines, based on the sixth advertisement event information and the group device mapping relationship, the sixth advertisement event corresponding to the group account of the first group to which the third electronic device belongs, and stores the sixth advertisement event corresponding to the group account of the first group.

S1123: The third-party monitoring server performs advertisement attribution analysis based on the first advertisement event to the sixth advertisement event that correspond to the group account of the first group, to obtain an advertisement attribution result.

**Example 4:** The advertisement system includes a plurality of electronic devices, an advertisement platform server, and a third-party monitoring server. The electronic device stores a group device mapping relationship, and the advertisement platform server and the third-party monitoring server may perform advertisement attribution analysis.

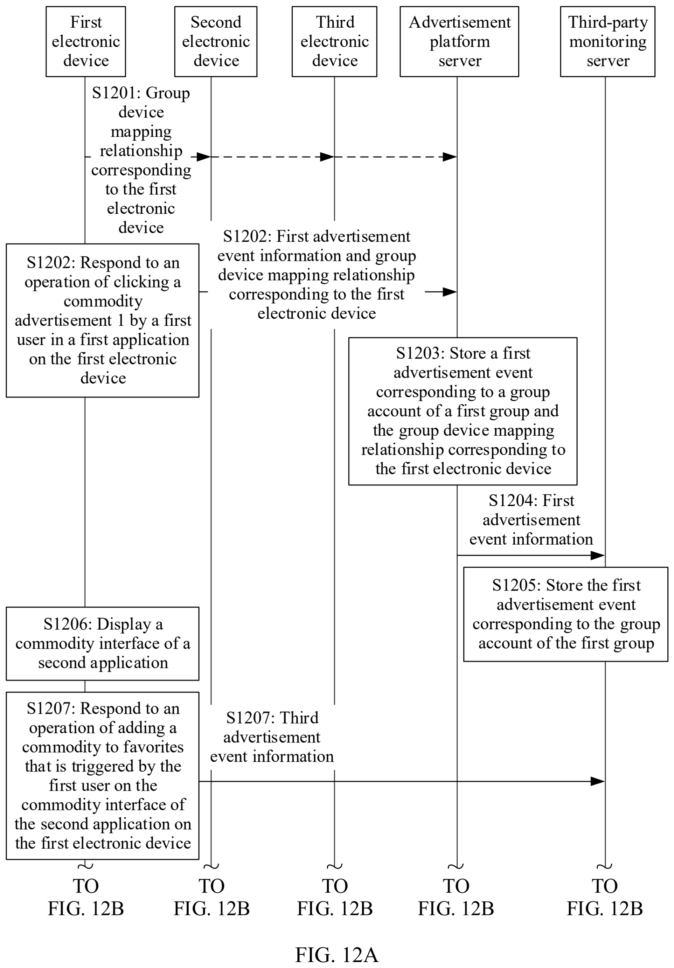

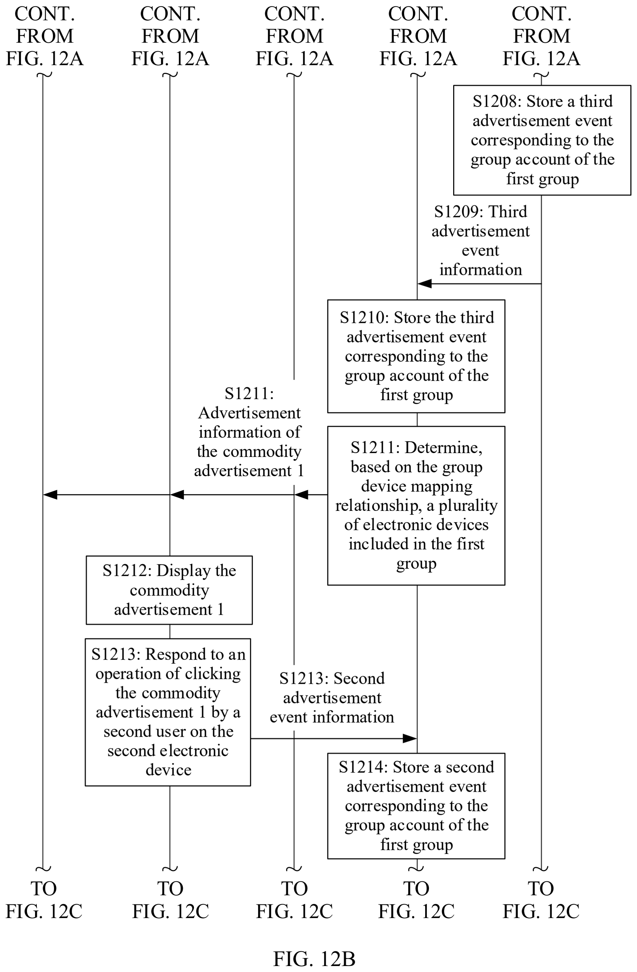

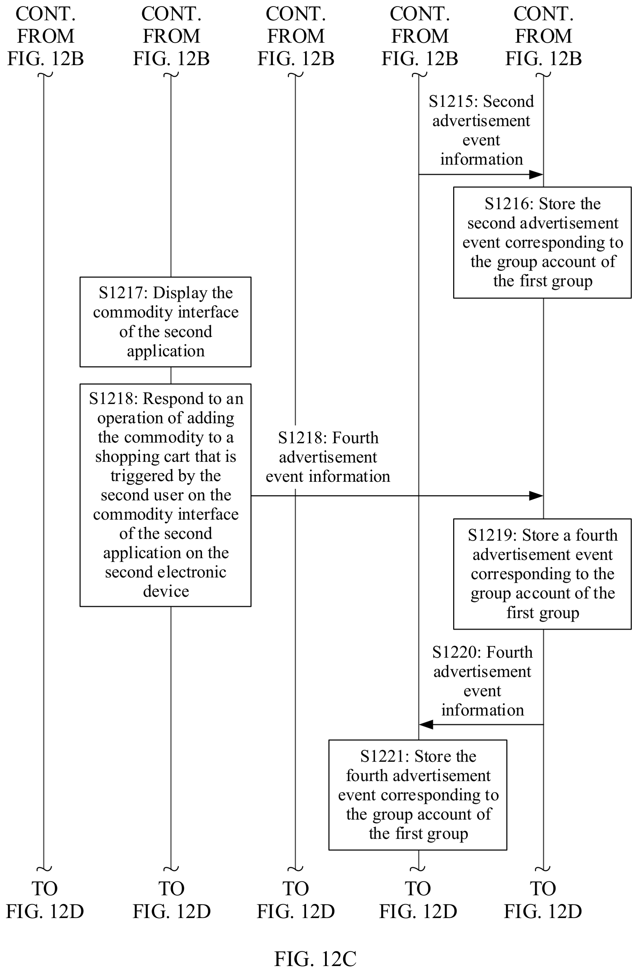

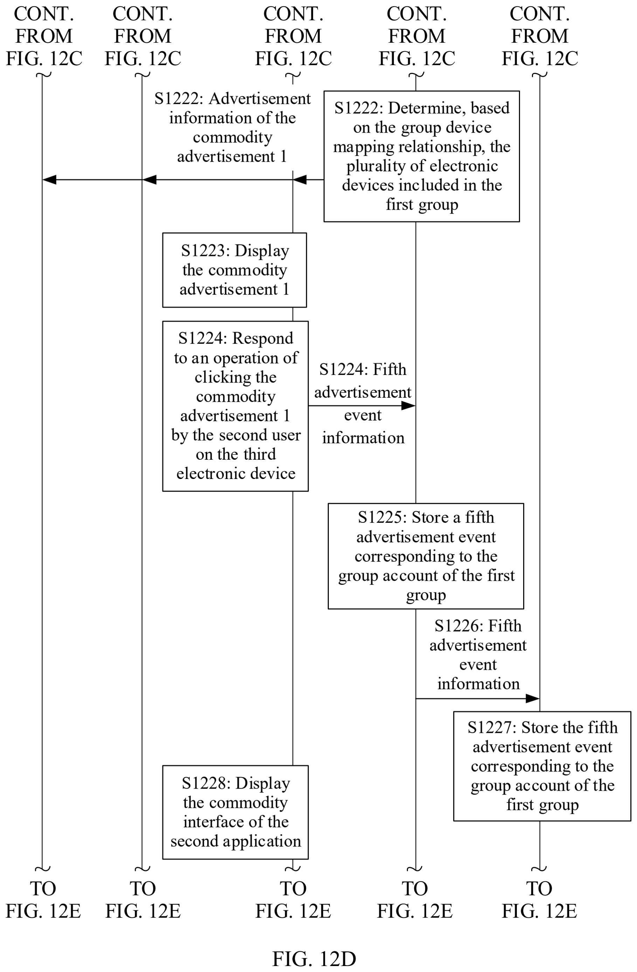

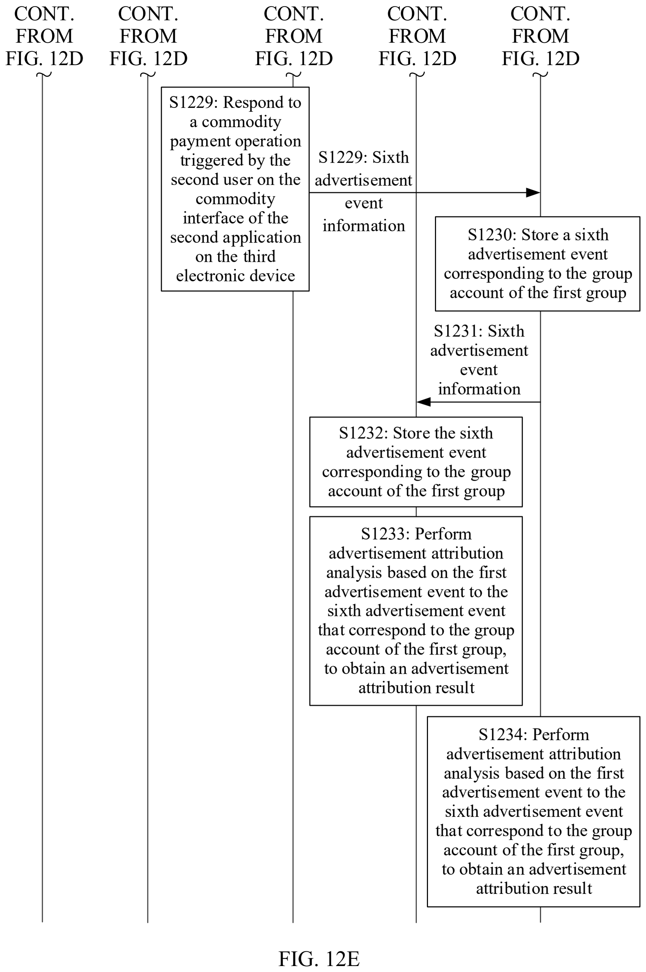

FIG. 12A to FIG. 12E are a flowchart of an advertisement attribution method according to an embodiment of this application. As shown in FIG. 12A to FIG. 12E, the method includes the following steps.

S1201: The first electronic device sends a group device mapping relationship corresponding to the first electronic device to the second electronic device, the third electronic device, and the advertisement platform server.

Optionally, the group device mapping relationship corresponding to the first electronic device is a group device mapping relationship of a first group to which the first electronic device belongs, and the first group includes at least the first electronic device, the second electronic device, and the third electronic device. When generating or updating the group device mapping relationship of the first group, the first electronic device may send the group device mapping relationship of the first group to another electronic device in the first group and the server.

It should be noted that, in this embodiment of this application, S1201 is an optional step. The first electronic device may alternatively send the group device mapping relationship corresponding to the first electronic device to the advertisement platform server when sending an advertisement event to the advertisement platform server. For example, in the following S1202, the first electronic device may send the group device mapping relationship corresponding to the first electronic device when sending a first advertisement event to the advertisement platform server.

S1202: In response to an operation of clicking a commodity advertisement 1 by the first user in a first application on the first electronic device, the first application on the first electronic device sends first advertisement event information and the group device mapping relationship corresponding to the first electronic device to the advertisement platform server.

The first advertisement event information includes a first group account corresponding to the first electronic device, an identifier of the first electronic device, and an identifier of the first advertisement event, and the first advertisement event is an advertisement click event.

It should be noted that in S1201, that the first electronic device sends the group device mapping relationship corresponding to the first electronic device to the advertisement platform server is an optional step. For example, when the first electronic device has performed S1201 before S1202, the first electronic device may not send the group device mapping relationship corresponding to the first electronic device.

Optionally, S1202 may be performed by the Ads SDK integrated into the first application on the electronic device shown in FIG. 8.

S1203: The advertisement platform server stores the first advertisement event corresponding to the group account of the first group and the group device mapping relationship corresponding to the first electronic device.

S1204: The advertisement platform server sends the first advertisement event information to the third-party monitoring server.

S1205: The third-party monitoring server stores the first advertisement event corresponding to the group account of the first group.

S1206: The first electronic device displays a commodity interface of a second application.

For example, the commodity advertisement 1 in S1202 may be the advertisement for the XX brand washing machine commodity in the commodity advertisement conversion scenario shown in FIG. 3; in this case, the commodity interface of the second application in S1206 may be an interface of the XX brand washing machine commodity.

S1207: In response to an operation of adding the commodity to favorites that is triggered by the first user on the commodity interface of the second application on the first electronic device, the second application on the first electronic device sends third advertisement event information to the third-party monitoring server.

The third advertisement event information includes the first group account corresponding to the first electronic device, the identifier of the first electronic device, and an identifier of a third advertisement event, and the third advertisement event is an advertisement event of adding the commodity to favorites.

Optionally, S1207 may be performed by the monitoring SDK integrated into the first application on the electronic device shown in FIG. 8.

S1208: The third-party monitoring server stores the third advertisement event corresponding to the group account of the first group.

S1209: The third-party monitoring server sends the third advertisement event information to the advertisement platform server.

S1210: The advertisement platform server stores the third advertisement event corresponding to the group account of the first group.

S1211: The advertisement platform server determines, based on the group device mapping relationship, a plurality of electronic devices included in the first group, and the advertisement platform server sends advertisement information of the commodity advertisement 1 to the plurality of electronic devices included in the first group.

For example, it is assumed that the group device mapping relationship stored in the advertisement platform server is Table 1, and the identifier of the first electronic device is OAID1. In this case, the server determines, based on the group device mapping relationship in Table 1, that the group account of the first group to which the first electronic device belongs is FID1, and FID1 corresponds to three electronic devices: OAID1, OAID2, and OAID3. The advertisement platform server may separately deliver the commodity advertisement 1 to the electronic devices whose identifiers are OAID1, OAID2, and OAID3.

S1212: The second electronic device displays the commodity advertisement 1.

For example, after receiving the commodity advertisement 1 delivered by the advertisement platform server, the second electronic device may display the commodity advertisement 1 on a leftmost screen of the second electronic device.

S1213: In response to an operation of clicking the commodity advertisement 1 by the second user on the second electronic device, the second electronic device sends second advertisement event information to the advertisement platform server.

In an optional implementation, the second advertisement event information includes the first group account corresponding to the second electronic device, an identifier of the second electronic device, and an identifier of a second advertisement event, and the second advertisement event is an advertisement click event.

In another optional implementation, the second advertisement event includes an identifier of the second electronic device and an identifier of a second advertisement event, the second advertisement event is an advertisement click event, and the advertisement platform server may determine, based on the group device mapping relationship, the group account of the first group to which the second electronic device belongs. In this implementation, the second electronic device may further send a group device mapping relationship corresponding to the second electronic device to the advertisement platform server. It may be understood that, the second electronic device and the first electronic device belong to the same group, and therefore the group device mapping relationship corresponding to the second electronic device is the same as the group device mapping relationship corresponding to the first electronic device.

For example, when the second electronic device displays the commodity advertisement 1 on the leftmost screen, S1213 may be performed by an Ads SDK on the leftmost screen of the second electronic device.

S1214: The advertisement platform server stores the second advertisement event corresponding to the group account of the first group.

S1215: The advertisement platform server sends the second advertisement event to the third-party monitoring server.

S1216: The third-party monitoring server stores the second advertisement event corresponding to the group account of the first group.

S1217: The second electronic device displays the commodity interface of the second application.

S1218: In response to an operation of adding the commodity to a shopping cart that is triggered by the second user on the commodity interface of the second application on the second electronic device, the second application on the second electronic device sends fourth advertisement event information to the third-party monitoring server.

The fourth advertisement event information includes the first group account corresponding to the second electronic device, the identifier of the second electronic device, and an identifier of a fourth advertisement event, and the fourth advertisement event is an advertisement event of adding the commodity to the shopping cart.

Optionally, S1218 may be performed by a monitoring SDK integrated into the second application on the second electronic device.

S1219: The third-party monitoring server stores the fourth advertisement event corresponding to the group account of the first group.

S1220: The third-party monitoring server sends the fourth advertisement event information to the advertisement platform server.

S1221: The advertisement platform server stores the fourth advertisement event corresponding to the group account of the first group.

S1222: The advertisement platform server determines, based on the group device mapping relationship, the plurality of electronic devices included in the first group, and the advertisement platform server sends the advertisement information of the commodity advertisement 1 to the plurality of electronic devices included in the first group.

S1223: The third electronic device displays the commodity advertisement 1.

For example, when starting a video application, the third electronic device may display the commodity advertisement 1 on an application interface of the video application.

S1224: In response to an operation of clicking the commodity advertisement 1 by the second user on the third electronic device, the third electronic device sends fifth advertisement event information to the advertisement platform server.

In an optional implementation, the fifth advertisement event information may include the first group account corresponding to the third electronic device, an identifier of the third electronic device, and an identifier of a fifth advertisement event, and the fifth advertisement event is an advertisement click event.

In another optional implementation, the fifth advertisement event may include an identifier of the third electronic device and an identifier of a fifth advertisement event, the fifth advertisement event is an advertisement click event, and the advertisement platform server may determine, based on the group device mapping relationship, the group account of the first group to which the third electronic device belongs. In this implementation, the third electronic device may further send the group device mapping relationship corresponding to the third electronic device to the advertisement platform server. It may be understood that, the third electronic device, the first electronic device, and the second electronic device belong to the same group, and therefore the group device mapping relationship corresponding to the third electronic device is the same as the group device mapping relationship corresponding to the first electronic device and the group device mapping relationship corresponding to the second electronic device.

For example, when the third electronic device displays the commodity advertisement 1 on the application interface of the video application, S1224 may be performed by an Ads SDK integrated into the video application.

S1225: The advertisement platform server stores the fifth advertisement event corresponding to the group account of the first group.

S1226: The advertisement platform server sends the fifth advertisement event information to the third-party monitoring server.

S1227: The third-party monitoring server stores the fifth advertisement event corresponding to the group account of the first group.

S1228: The third electronic device displays the commodity interface of the second application.

S1229: In response to a commodity payment operation triggered by the second user on the commodity interface of the second application on the third electronic device, the second application on the third electronic device sends sixth advertisement event information to the third-party monitoring server.

The sixth advertisement event information may include the first group account corresponding to the third electronic device, the identifier of the third electronic device, and an identifier of a sixth advertisement event, and the sixth advertisement event is a commodity payment event.

Optionally, S1229 may be performed by a monitoring SDK integrated into the second application on the third electronic device.

S1230: The third-party monitoring server stores the sixth advertisement event corresponding to the group account of the first group.

S1231: The third-party monitoring server sends the sixth advertisement event information to the advertisement platform server.

S1232: The advertisement platform server stores the sixth advertisement event corresponding to the group account of the first group.

S1233: The third-party monitoring server performs advertisement attribution analysis based on the first advertisement event to the sixth advertisement event that correspond to the group account of the first group, to obtain an advertisement attribution result.

S1234: The advertisement platform server performs advertisement attribution analysis based on the first advertisement event to the sixth advertisement event that correspond to the group account of the first group, to obtain an advertisement attribution result.

It should be noted that an execution sequence of S1233 and S1234 is not limited in embodiments of this application. During implementation, S1233 may be performed before S1234, or S1234 may be performed before S1233, or S1233 and S1234 may be simultaneously performed.

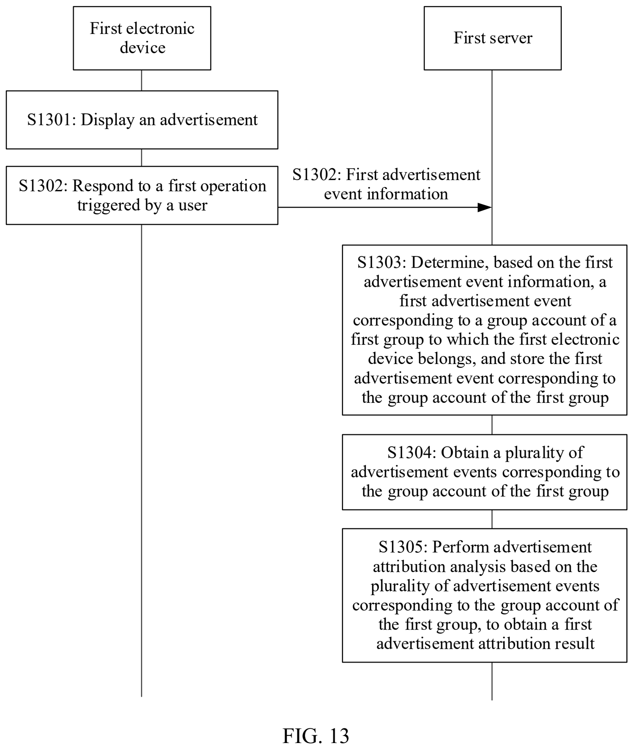

Based on a same concept, an embodiment of this application further provides an advertisement attribution method. The method may be performed by a first electronic device and a first server. The first electronic device may be the electronic device 101 in the advertisement system shown in FIG. 1, and the first server may be the advertisement platform server 102A or the third-party monitoring server 102B in the advertisement system shown in FIG. 1. FIG. 13 is a flowchart of an advertisement attribution method according to an embodiment of this application. As shown in FIG. 13, the method includes the following steps.

S1301: The first electronic device displays an advertisement.

S1302: The first electronic device sends first advertisement event information to the first server in response to a first operation triggered by a user.

The first operation is an operation related to the advertisement or an operation related to a commodity interface corresponding to the advertisement, and the advertisement event information indicates a group account of a first group to which the first electronic device belongs and an advertisement event.

S1303: The first server determines, based on the first advertisement event information, a first advertisement event corresponding to the group account of the first group to which the first electronic device belongs, and stores the first advertisement event corresponding to the group account of the first group.

S1304: The first server obtains a plurality of advertisement events corresponding to the group account of the first group.

The plurality of advertisement events corresponding to the group account of the first group are determined based on a plurality of pieces of advertisement event information sent by a plurality of electronic devices in the first group, and the plurality of advertisement events corresponding to the group account of the first group include the first advertisement event.

S1305: The first server performs advertisement attribution analysis based on the plurality of advertisement events corresponding to the group account of the first group, to obtain a first advertisement attribution result.

It should be noted that, for a specific implementation of the advertisement attribution method shown in FIG. 13 in this application, refer to the foregoing embodiments of this application. Details are not described again.

It may be understood that, to implement functions of the electronic device and the server in the foregoing embodiments, the electronic device and the server include corresponding hardware structures and/or software structures for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

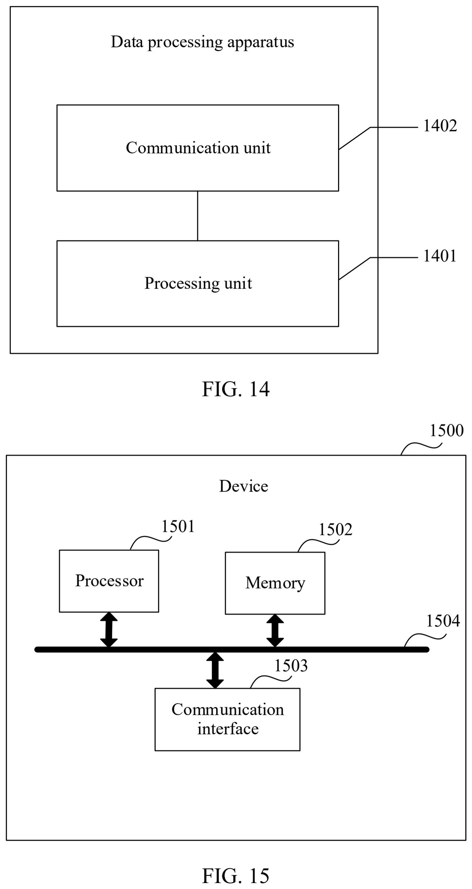

FIG. 14 is an example diagram of a possible structure of a data processing apparatus according to an embodiment of this application. As shown in FIG. 14, the data processing apparatus may include a processing unit 1401 and a communication unit 1402.

In an implementation, the data processing apparatus may be configured to implement a method performed by any electronic device in the foregoing embodiments. The data processing apparatus may be the electronic device, or may be a chip, a chip group, a part of a chip that is in the electronic device and that is configured to perform a related method function. The processing unit 1401 is configured to: display an advertisement; and send advertisement event information to a server through the communication unit 1402 in response to a first operation triggered by a user, where the first operation is an operation related to the advertisement or an operation related to a commodity interface corresponding to the advertisement, and the advertisement event information indicates a group account of a first group to which the electronic device belongs and an advertisement event.

For example, the advertisement event information includes an identifier of the electronic device and/or the group account of the first group.

Optionally, the processing unit 1401 is further configured to send, through the communication unit 1402, a group device mapping relationship corresponding to the electronic device to the server, where the group device mapping relationship corresponding to the electronic device includes a mapping relationship between the group account of the first group and a plurality of electronic devices in the first group, and the plurality of electronic devices include the electronic device.

For example, the group account of the first group is any one of: an identifier of a primary device in the first group, a user-defined identifier, an identifier generated according to a preset rule, or an identifier preconfigured by a system.

For example, the identifier of the primary device is any one of the following: a unique identifier, an internet protocol address, or an open advertising identifier of the primary device.

For example, the advertisement event information further includes a device type identifier of the electronic device.

For example, the advertisement event includes any one of the following: clicking the advertisement, adding a commodity to favorites, adding a commodity to a shopping cart, or paying for a commodity; and the advertisement event information includes an identifier of the advertisement event.

In an implementation, the data processing apparatus may be configured to implement a method performed by any server in the foregoing embodiments. The data processing apparatus may be the server, or may be a chip, a chip group, a part of a chip that is in the server and that is configured to perform a related method function. The processing unit 1401 is configured to: receive first advertisement event information from a first electronic device through the communication unit 1402, where the first advertisement event information indicates a group account of a first group to which the first electronic device belongs and a first advertisement event; determine, based on the first advertisement event information, the first advertisement event corresponding to the group account of the first group to which the first electronic device belongs, and store the first advertisement event corresponding to the group account of the first group; obtain a plurality of advertisement events corresponding to the group account of the first group, where the plurality of advertisement events corresponding to the group account of the first group are determined based on a plurality of pieces of advertisement event information sent by a plurality of electronic devices in the first group, and the plurality of advertisement events corresponding to the group account of the first group include the first advertisement event; and perform advertisement attribution analysis based on the plurality of advertisement events corresponding to the group account of the first group, to obtain a first advertisement attribution result.

Optionally, the processing unit 1401 is further configured to: before obtaining the plurality of advertisement events corresponding to the group account of the first group, receive second advertisement event information from a second electronic device through the communication unit 1402, where the second advertisement event information indicates the group account of the first group to which the second electronic device belongs and a second advertisement event; and determine, based on the second advertisement event information, the second advertisement event corresponding to the group account of the first group to which the second electronic device belongs, and store the second advertisement event corresponding to the group account of the first group, where the plurality of advertisement events corresponding to the group account of the first group include the second advertisement event.

Optionally, the processing unit 1401 is further configured to: before obtaining the plurality of advertisement events corresponding to the group account of the first group, receive, through the communication unit 1402, third advertisement event information sent by a second server, where the third advertisement event information is sent by the first electronic device to the second server, and the third advertisement event information indicates the group account of the first group to which the first electronic device belongs and a third advertisement event; and determine, based on the third advertisement event information, the third advertisement event corresponding to the group account of the first group to which the first electronic device belongs, and store the third advertisement event corresponding to the group account of the first group, where the plurality of advertisement events corresponding to the group account of the first group include the third advertisement event.

For example, the first advertisement event information includes an identifier of the first advertisement event and an identifier of the first electronic device. Optionally, the processing unit 1401 is specifically configured to: determine, based on the identifier of the first advertisement event, the first advertisement event corresponding to the first electronic device; determine the group account of the first group based on a group device mapping relationship and the identifier of the first electronic device; and map the first advertisement event corresponding to the first electronic device to the first advertisement event corresponding to the group account of the first group, where the group device mapping relationship includes a mapping relationship between the group account of the first group and the plurality of electronic devices in the first group.

Optionally, the processing unit 1401 is further configured to receive, through the communication unit 1402, the group device mapping relationship sent by the first electronic device, the second electronic device, or the second server.

Optionally, the processing unit 1401 is further configured to: before obtaining the plurality of advertisement events corresponding to the group account of the first group, determine that the first advertisement event is a conversion event.

Optionally, the processing unit 1401 is further configured to: after determining, based on the first advertisement event information, the first advertisement event corresponding to the group account of the first group to which the first electronic device belongs, determine the plurality of electronic devices included in the first group; and send, through the communication unit 1402, the advertisement information corresponding to the first advertisement event to the plurality of electronic devices.

For example, the first advertisement event information includes a device type identifier of the first electronic device. Optionally, the processing unit 1401 is further configured to: determine, based on the first advertisement event information, the first advertisement event corresponding to a device type of the first electronic device, and store the first advertisement event corresponding to the device type of the first electronic device; obtain a plurality of advertisement events corresponding to the device type of the first electronic device, where the plurality of advertisement events include the first advertisement event; and perform advertisement attribution analysis based on the plurality of advertisement events corresponding to the device type of the first electronic device, to obtain a second advertisement attribution result.

For example, the advertisement event includes any one of the following: clicking an advertisement, adding a commodity to favorites, adding a commodity to a shopping cart, or paying for a commodity.

Division into units (functional modules) in embodiments of this application is an example, is merely logical function division, and may be other division during actual implementation. In addition, units in embodiments of this application may be integrated into one processor, or may exist alone physically, or two or more units are integrated into one module. The integrated unit may be implemented in a form of hardware, or may be implemented in a form of a software functional module. It may be understood that, for functions or implementations of the units in embodiments of this application, further refer to related descriptions in the method embodiments.

FIG. 15 is an example diagram of a possible structure of a device according to an embodiment of this application. The device may be configured to implement a function of the server in the foregoing embodiments, or may be configured to implement a function of the electronic device in the foregoing embodiments. Therefore, beneficial effect of the foregoing embodiments can also be implemented.

As shown in FIG. 15, a device 1500 may include a processor 1501, a memory 1502, and a communication interface 1503. The processor 1501, the memory 1502, and the communication interface 1503 are coupled to each other. Optionally, the memory 1502 may be configured to store instructions executed by the processor 1501, or store input data required by the processor 1501 to run the instructions, or store data generated after the processor 1501 runs the instructions. The communication interface 1503 may be a transceiver or an input/output interface.

Optionally, as shown in FIG. 15, the processor 1501, the memory 1502, and the communication interface 1503 are connected to each other through a bus 1504. The bus 1504 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 15, but this does not indicate that there is only one bus or only one type of bus.

When the device 1500 is used in a server, the processor 1501 may be configured to implement a processing function of the server in the foregoing embodiments. For example, the processor 1501 may be configured to perform an action of the processing unit 1401 when the data processing apparatus is used in the server. The communication interface 1503 may be configured to implement receiving and sending functions of the server in the foregoing embodiments. For example, the communication interface 1503 may be configured to perform an action of the communication unit 1402 when the data processing apparatus is used in the server. Details are not described herein again in this application.

When the device 1500 is used in an electronic device, the processor 1501 may be configured to implement a processing function of the electronic device in the foregoing embodiments. For example, the processor 1501 may be configured to perform an action of the processing unit 1401 when the data processing apparatus is used in the electronic device. The communication interface 1503 may be configured to implement receiving and sending functions of the electronic device in the foregoing embodiments. For example, the communication interface 1503 may be configured to perform an action of the communication unit 1402 when the data processing apparatus is used in the electronic device. Details are not described herein again in this application.

It may be understood that the processor 1501 in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The general-purpose processor may be a microprocessor, or may be any conventional processor.

The memory 1502 in FIG. 15 in this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. It should be noted that memories in the system and the method described in this specification include but are not limited to the memories and memories of any other suitable type.

Based on the foregoing embodiments, this application further provides an advertisement system. The advertisement system includes a plurality of electronic devices and at least one server. The electronic device is configured to implement functions of the electronic device in the foregoing embodiments, and the server is configured to implement functions of the server in the foregoing embodiments.

Based on the foregoing embodiments, this application further provides a computer program product including instructions. When the computer program product runs on a computer, the computer is enabled to perform the method described in embodiments of this application.

Based on the foregoing embodiments, this application further provides a computer-readable storage medium. The computer-readable storage medium stores a computer program. When the computer program is executed by a computer, the computer is enabled to perform the method described in embodiments of this application.

Based on the foregoing embodiments, this application further provides a chip. The chip is configured to read a computer program stored in a memory, to implement the method described in embodiments of this application.

Based on the foregoing embodiments, this application provides a chip system. The chip system includes a processor, configured to support a computer apparatus in implementing the method described in embodiments of this application. In a possible design, the chip system further includes a memory, and the memory is configured to store a program and data that are necessary for the computer apparatus. The chip system may include a chip, or may include a chip and another discrete device.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. An advertisement attribution method, applied to an electronic device, wherein the method comprises:
displaying an advertisement; and
sending advertisement event information to a server in response to a first operation triggered by a user, wherein the first operation is an operation related to the advertisement or an operation related to a commodity interface corresponding to the advertisement, and the advertisement event information indicates a group account of a first group to which the electronic device belongs and an advertisement event.

2. The method according to claim 1, wherein the advertisement event information comprises an identifier of the electronic device and/or the group account of the first group.

3. The method according to claim 1 or 2, wherein the method further comprises:
sending a group device mapping relationship corresponding to the electronic device to the server, wherein the group device mapping relationship corresponding to the electronic device comprises a mapping relationship between the group account of the first group and a plurality of electronic devices in the first group, and the plurality of electronic devices comprise the electronic device.

4. The method according to any one of claims 1 to 3, wherein the group account of the first group is any one of: an identifier of a primary device in the first group, a user-defined identifier, an identifier generated according to a preset rule, or an identifier preconfigured by a system.

5. The method according to claim 4, wherein the identifier of the primary device is any one of the following: a unique identifier, an internet protocol address, or an open advertising identifier of the primary device.

6. The method according to any one of claims 1 to 5, wherein the advertisement event information further comprises a device type identifier of the electronic device.

7. The method according to any one of claims 1 to 6, wherein the advertisement event comprises any one of the following:
clicking the advertisement, adding a commodity to favorites, adding a commodity to a shopping cart, or paying for a commodity;
and the advertisement event information comprises an identifier of the advertisement event.

8. An advertisement attribution method, applied to a first server, wherein the method comprises:
receiving first advertisement event information from a first electronic device, wherein the first advertisement event information indicates a group account of a first group to which the first electronic device belongs and a first advertisement event;
determining, based on the first advertisement event information, the first advertisement event corresponding to the group account of the first group to which the first electronic device belongs, and storing the first advertisement event corresponding to the group account of the first group;
obtaining a plurality of advertisement events corresponding to the group account of the first group, wherein the plurality of advertisement events corresponding to the group account of the first group are determined based on a plurality of pieces of advertisement event information sent by a plurality of electronic devices in the first group, and the plurality of advertisement events corresponding to the group account of the first group comprise the first advertisement event; and
performing advertisement attribution analysis based on the plurality of advertisement events corresponding to the group account of the first group to obtain a first advertisement attribution result.

9. The method according to claim 8, wherein before obtaining the plurality of advertisement events corresponding to the group account of the first group, the method comprises:
receiving second advertisement event information from a second electronic device, wherein the second advertisement event information indicates the group account of the first group to which the second electronic device belongs and a second advertisement event; and
determining, based on the second advertisement event information, the second advertisement event corresponding to the group account of the first group to which the second electronic device belongs, and storing the second advertisement event corresponding to the group account of the first group, wherein the plurality of advertisement events corresponding to the group account of the first group comprise the second advertisement event.

10. The method according to claim 8 or 9, wherein before obtaining the plurality of advertisement events corresponding to the group account of the first group, the method further comprises:
receiving third advertisement event information sent by a second server, wherein the third advertisement event information is sent by the first electronic device to the second server, and the third advertisement event information indicates the group account of the first group to which the first electronic device belongs and a third advertisement event; and
determining, based on the third advertisement event information, the third advertisement event corresponding to the group account of the first group to which the first electronic device belongs, and storing the third advertisement event corresponding to the group account of the first group, wherein the plurality of advertisement events corresponding to the group account of the first group comprise the third advertisement event.

11. The method according to any one of claims 8 to 10, wherein the first advertisement event information comprises an identifier of the first advertisement event and an identifier of the first electronic device; and
determining, based on the first advertisement event information, the first advertisement event corresponding to the group account of the first group to which the first electronic device belongs comprises:
determining, based on the identifier of the first advertisement event, the first advertisement event corresponding to the first electronic device; determining the group account of the first group based on a group device mapping relationship and the identifier of the first electronic device; and mapping the first advertisement event corresponding to the first electronic device to the first advertisement event corresponding to the group account of the first group, wherein the group device mapping relationship comprises a mapping relationship between the group account of the first group and the plurality of electronic devices in the first group.

12. The method according to claim 11, wherein the method further comprises:
receiving the group device mapping relationship sent by the first electronic device, the second electronic device, or the second server.

13. The method according to any one of claims 8 to 12, wherein after determining, based on the first advertisement event information, the first advertisement event corresponding to the group account of the first group to which the first electronic device belongs, the method further comprises:
determining the plurality of electronic devices comprised in the first group; and
sending advertisement information corresponding to the first advertisement event to the plurality of electronic devices.

14. The method according to any one of claims 8 to 13, wherein the first advertisement event information comprises a device type identifier of the first electronic device, and the method further comprises:
determining, based on the first advertisement event information, the first advertisement event corresponding to a device type of the first electronic device, and storing the first advertisement event corresponding to the device type of the first electronic device; and
obtaining a plurality of advertisement events corresponding to the device type of the first electronic device, wherein the plurality of advertisement events comprise the first advertisement event; and performing advertisement attribution analysis based on the plurality of advertisement events corresponding to the device type of the first electronic device, to obtain a second advertisement attribution result.

15. The method according to any one of claims 8 to 13, wherein the advertisement event comprises any one of the following:
clicking an advertisement, adding a commodity to favorites, adding a commodity to a shopping cart, or paying for a commodity.

16. An advertisement system, wherein the advertisement system comprises a first electronic device, a second electronic device, and a first server;
the first electronic device is configured to: display an advertisement; and send first advertisement event information to the first server in response to a first operation triggered by a first user, wherein the first operation is an operation related to the advertisement or an operation related to a commodity interface corresponding to the advertisement, and the first advertisement event information indicates a group account of a first group to which the first electronic device belongs and a first advertisement event;
the second electronic device is configured to: display the advertisement; and send second advertisement event information to the first server in response to a second operation triggered by a second user, wherein the second operation is an operation related to the advertisement or an operation related to the commodity interface corresponding to the advertisement, and the second advertisement event information indicates the group account of the first group to which the second electronic device belongs and a second advertisement event; and
the first server is configured to: receive the first advertisement event information and the second advertisement event information; determine, based on the first advertisement event information, the first advertisement event corresponding to the group account of the first group to which the first electronic device belongs, and store the first advertisement event corresponding to the group account of the first group; determine, based on the second advertisement event information, the second advertisement event corresponding to the group account of the first group to which the second electronic device belongs, and store the second advertisement event corresponding to the group account of the first group; obtain a plurality of advertisement events corresponding to the group account of the first group, wherein the plurality of advertisement events corresponding to the group account of the first group are determined based on a plurality of pieces of advertisement event information sent by a plurality of electronic devices in the first group, and the plurality of advertisement events corresponding to the group account of the first group comprise the first advertisement event and the second advertisement event; and perform advertisement attribution analysis based on the plurality of advertisement events, to obtain a first advertisement attribution result.

17. The system according to claim 16, wherein the advertisement system comprises a second server;
the first electronic device is further configured to send third advertisement event information to the second server in response to a third operation triggered by the first user, wherein the third operation is an operation related to the commodity interface corresponding to the advertisement, and the third advertisement event information indicates the group account of the first group to which the first electronic device belongs and a third advertisement event;
the second server is configured to: receive the third advertisement event information sent by the first electronic device, and send the third advertisement event information to the first server; and
the first server is further configured to: before obtaining the plurality of advertisement events corresponding to the group account of the first group, receive the third advertisement event information sent by the second server; determine, based on the third advertisement event information, the third advertisement event corresponding to the group account of the first group to which the first electronic device belongs; and store the third advertisement event corresponding to the group account of the first group, wherein the plurality of advertisement events corresponding to the group account of the first group comprise the third advertisement event.

18. The system according to claim 16 or 17, wherein the first advertisement event information comprises an identifier of the first advertisement event and an identifier of the first electronic device, and the second advertisement event information comprises an identifier of the second advertisement event and an identifier of the second electronic device; and
the first server is specifically configured to:
determine, based on the identifier of the first advertisement event, the first advertisement event corresponding to the first electronic device; determine the group account of the first group based on a group device mapping relationship and the identifier of the first electronic device; and map the first advertisement event corresponding to the first electronic device to the first advertisement event corresponding to the group account of the first group, wherein the group device mapping relationship comprises a mapping relationship between the group account of the first group and the plurality of electronic devices in the first group; and
determine, based on the identifier of the second advertisement event, the second advertisement event corresponding to the second electronic device; determine the group account of the first group based on the group device mapping relationship and the identifier of the second electronic device; and map the second advertisement event corresponding to the second electronic device to the second advertisement event corresponding to the group account of the first group.

19. The system according to claim 18, wherein the first server is further configured to:
receive the group device mapping relationship sent by the first electronic device, the second electronic device, or the second server.

20. The system according to any one of claims 16 to 19, wherein the first server is further configured to:
after determining, based on the first advertisement event information, the first advertisement event corresponding to the group account of the first group to which the first electronic device belongs, and/or after determining, based on the second advertisement event information, the second advertisement event corresponding to the group account of the first group to which the second electronic device belongs,
determine the plurality of electronic devices comprised in the first group, and send advertisement information corresponding to the first advertisement event to the plurality of electronic devices.

21. The system according to any one of claims 16 to 20, wherein the first advertisement event information comprises a device type identifier of the first electronic device; and
the first server is further configured to: determine, based on the first advertisement event information, the first advertisement event corresponding to a device type of the first electronic device, and store the first advertisement event corresponding to the device type of the first electronic device; and obtain a plurality of advertisement events corresponding to the device type of the first electronic device, and perform advertisement attribution analysis based on the plurality of advertisement events corresponding to the device type of the first electronic device, to obtain a second advertisement attribution result.

22. An electronic device, comprising at least one processor, wherein the at least one processor is coupled to at least one memory, and the at least one processor is configured to read a computer program stored in the at least one memory, to perform the method according to any one of claims 1 to 7.

23. A server, comprising at least one processor, wherein the at least one processor is coupled to at least one memory, and the at least one processor is configured to read a computer program stored in the at least one memory, to perform the method according to any one of claims 8 to 15.

24. A chip system, wherein the chip system comprises a processing circuit and a storage medium, the storage medium stores instructions, and when the instructions are executed by the processing circuit, the method according to any one of claims 1 to 7 is implemented, or the method according to any one of claims 8 to 15 is performed.

25. A computer-readable storage medium, wherein the computer-readable storage medium stores instructions, and when the instructions are run on a computer, the computer is enabled to perform the method according to any one of claims 1 to 7, or perform the method according to any one of claims 8 to 15.

26. A computer program product, wherein when the computer program product runs on a computer, the computer is enabled to perform the method according to any one of claims 1 to 7, or perform the method according to any one of claims 8 to 15.
